# EUROPÄISCHE PATENTSCHRIFT

(11) **EP 3 529 032 B1**
(45) Veröffentlichungstag und Bekanntmachung des Hinweises auf die Patenterteilung: **09.08.2023**
(21) Anmeldenummer: 17746072.2
(22) Anmeldetag: 27.07.2017
(51) Int. Cl.: B29C 48/10, B29C 48/32, B29C 48/87, B29C 48/86, B29C 55/28

(54) **BLASKOPF FÜR EINE BLASEXTRUSIONSVORRICHTUNG SOWIE VERFAHREN ZUR HERSTELLUNG EINER BLASFOLIE**
BLOW HEAD FOR A BLOW EXTRUSION DEVICE AND METHOD FOR PRODUCING A BLOWN FILM
TÊTE DE SOUFFLAGE POUR UN DISPOSITIF D'EXTRUSION PAR SOUFFLAGE AINSI QUE PROCÉDÉ POUR LA FABRICATION D'UNE FEUILLE SOUFFLÉE

(30) Priorität: 19.10.2016 DE 102016119944
(43) Veröffentlichungstag der Anmeldung: 28.08.2019
(73) Patentinhaber: Windmöller & Hölscher KG, 49525 Lengerich (DE)
(72) Erfinder: RÜBBELKE, Ingo, 59590 Geseke (DE); GERSMANN, Mathis, 28279 Bremen (DE)
(86) Internationale Anmeldenummer: PCT/EP2017/069029
(87) Internationale Veröffentlichungsnummer: WO 2018/072904

(56) Entgegenhaltungen:
- EP-A2- 0 149 335
- DE-U1- 8 912 844
- US-A- 3 029 474
- US-A- 3 949 042
- US-A- 3 949 042
- US-A- 4 088 434
- US-A- 4 484 883
- US-A- 4 488 861
- US-A- 4 798 526
- US-A- 5 466 402
- US-B2- 7 008 577

## Beschreibung

Die vorliegende Erfindung betrifft einen Blaskopf sowie eine Düsenvorrichtung für eine Blasextrusionsvorrichtung zur Herstellung einer Blasfolie aus einer Materialschmelze, aufweisend eine Austrittsöffnung zum Auslassen der Materialschmelze als Blasfolie, wobei im Blaskopf bzw. der Düsenvorrichtung ein Schmelzkanal zum Fördern der Materialschmelze zur Austrittsöffnung gebildet ist. Die Erfindung betrifft ferner einen Grundkörper und eine Temperiervorrichtung zur Verwendung in einem Blaskopf bzw. einer Düsenvorrichtung für die Blasextrusionsvorrichtung, wobei die Temperiervorrichtung eine Kühlvorrichtung zum Kühlen der Materialschmelze und eine Heizvorrichtung zum Heizen der Materialschmelze aufweist. Darüber hinaus betrifft die Erfindung ein Verfahren zur Herstellung einer Blasfolie mittels einer Blasextrusionsvorrichtung.

Im Stand der Technik ist es bekannt, zur Herstellung von Blasfolien Blasextrusionsvorrichtungen einzusetzen. Dabei wird für gewöhnlich durch eine Austrittsöffnung einer Düsenvorrichtung eine Materialschmelze als Blasfolie ausgegeben und anschließend in dieser Blasenform abgekühlt. Das Kühlen erfolgt häufig von der Außenseite und/oder der Innenseite durch eine Luftkühlvorrichtung. Bei bekannten Düsenvorrichtungen bzw. bei bekannten Blasextrusionsvorrichtungen ist bei der Herstellung bzw. Abkühlung von Blasfolien mit großer Sorgfalt vorzugehen.

Bei den bekannten Blasextrusionsvorrichtungen wird die von einem Extruder gelieferte Materialschmelze in einem Blaskopf zu einem Schlauch ausgeformt. Der ausgeformte Schlauch wird nach dem Austritt aus der Austrittsöffnung der Blasextrusionsvorrichtung von innen und/oder außen zur Kühlung mit kalter Luft angeblasen und dabei sowohl quer als auch längs bis zu einem Bereich einer Frostzone biaxial verstreckt.

Die maximale Ausstoßleistung bei bekannten Blasextrusionsvorrichtungen ist in den meisten Fällen durch die Stabilität der Folienblase zwischen der Austrittsöffnung und der Frostzone limitiert. D.h., die in diesem Bereich noch schmelzeförmige Folienblase wird mit steigendem Ausstoß zunehmend labiler und lässt sich nicht mehr ausreichend mit dem zur Verfügung gestelltem Luftstrom kühlen und ausformen. Die Folienblase kann infolge dessen abreißen und die Anlage muss neu angefahren werden.

Des Weiteren hat sich gezeigt, dass es bei der Extrusion von Blasfolien bei bestimmen Rohstoffkombinationen des Extrudates durch strömungsbedingte Wechselwirkungen zwischen der fließenden Materialschmelze und der Schmelzkanalwandung an der Austrittsöffnung der Düsenvorrichtung häufig zu strukturellen Unregelmäßigkeiten an der Blasfolienoberfläche kommt.

Diese entstehenden Oberflächenirregularitäten werden auch als Oberflächenschmelzbruch oder kurz als Schmelzbruch bezeichnet, der sich im Wesentlichen auf die Extrudatoberfläche beschränkt. Insbesondere die häufig in der Außen- und Innenschicht eingesetzten LLDPE oder mLLDPE Kunststoffe lassen sich oft nicht in zufriedenstellender Folienoptik extrudieren, ohne sogenannte Prozesshilfsmittel hinzu zu dosieren. Diese Prozesshilfsmittel dienen als Additive, um beispielsweise die Gleiteigenschaften der Kunststoffschmelze an der Schmelzkanalwandung zu erhöhen und entsprechend die Reibung an der Schmelzkanalwandung zu reduzieren. Diese Additive vermindern Schmelzbrüche in den Extrudaten. Nachteiligerweise sind derartige Additive teuer. Ferner sind Anwendungen bekannt, bei welchen Additive verboten sind. Zudem können die genannten Additive bzw. Prozesshilfsmittel auch die rheologischen Eigenschaften des Kunststoffes der extrudierten Folie bzw. Schlauches beeinflussen. Zudem hat sich gezeigt, dass in Überschussmengen die eingesetzten Additive kritische Schlauch- bzw. Folieneigenschaften in der entgegengesetzten Richtung beeinflussen können, wie Glanz, Trübung, Transparenz und Verschweißbarkeit der Folie.

Eine Verbesserung der Blasfolieneigenschaften kann alternativ durch eine signifikante Absenkung der Temperatur des aus der Austrittsöffnung austretenden Materialschmelze bzw. Blasfolie erzielt werden. In der Vergangenheit wurde dazu mehrfach versucht, den Bereich vor der Austrittsöffnung der Düsenvorrichtung aktiv unter die vorherrschenden Temperaturen der Materialschmelze herunter zu kühlen. Eine intensive Vorkühlung in diesem Bereich ruft jedoch den so genannten Schmelzbrucheffekt und in einem Blaskopfgrundkörper die Gefahr von Materialanhaftungen und somit verweilzeitbedingte Materialschädigung hervor. Deshalb konnte bislang keine wirksame Abkühlung der Materialschmelze im Blaskopf bzw. in einem Bereich vor der Austrittsöffnung praxisgerecht umgesetzt werden.

Aus der internationalen Patentanmeldung WO 2015/055162 A1 ist es bekannt, bei einer Blasextrusionsvorrichtung die Materialschmelze auf einem Weg durch einen Schmelzkanal einer Düsenvorrichtung zunächst zu kühlen, beim Austritt aus dem Schmelzkanal aber zu heizen. Hierfür sind an einem Grundkörper der Düsenvorrichtung eine Kühlvorrichtung und eine Heizvorrichtung angeordnet. Durch Kühlen und Heizen der Materialschmelze ist es möglich, der Gefahr eines Schmelzbruchs entgegen zu wirken. Wird der Grundkörper durch die Kühlvorrichtung jedoch zu stark gekühlt, wirkt sich dies auf die nachgeordnete Heizvorrichtung bzw. einen korrespondierenden Heizabschnitt des Grundkörpers auf. Wird der Grundkörper durch die Heizvorrichtung zu stark geheizt, wirkt sich dies entsprechend auf die vorgeschaltete Kühlvorrichtung bzw. einen korrespondierenden Kühlabschnitt des Grundkörpers auf. D.h., werden der Kühlabschnitt und/oder der Heizabschnitt durch die Heizvorrichtung bzw. die Kühlvorrichtung zu stark temperiert, finden zwischen Kühlabschnitt und dem Heizabschnitt Wärmeübergänge statt, die sich negativ auf die Materialschmelze auswirken. Deshalb dürfen der Kühlabschnitt und/oder der Heizabschnitt der WO 2015/055162 A1 nur beschränkt temperiert werden.

Weitere Extrusionsvorrichtungen sind aus den Dokumenten US 4 798 526 A US 4 088 434 A, US 4 488 861 A, US 5 466 402 A und US 3 949 042 A bekannt, ausgehend von welchen weiterhin der Wunsch nach einer verbesserten Temperaturbehandlung der zu verarbeitenden Materialschmelze besteht. Aus der US 4 484 883 A ist ein Extrusionswerkzeug zur Herstellung von Hohlkörpern aus Duroplasten bekannt. Aufgabe der vorliegenden Erfindung ist es, die voranstehend beschriebenen Nachteile zumindest teilweise zu beheben. Insbesondere ist es Aufgabe der vorliegenden Erfindung, einen Blaskopf, eine Düsenvorrichtung, einen Grundkörper, eine Temperiervorrichtung, ein Verfahren zur Herstellung einer Blasfolie sowie eine Blasextrusionsvorrichtung zur Verfügung zu stellen, wobei Blasfolien auf schnelle, einfache und kostengünstige Weise hergestellt werden können und dabei die Gefahr eines Schmelzbruches verringert oder beseitigt werden kann.

Die voranstehende Aufgabe wird durch die Patentansprüche gelöst. Insbesondere wird die voranstehende Aufgabe durch den Blaskopf gemäß Anspruch 1, die Düsenvorrichtung gemäß Anspruch 10, den Grundkörper gemäß Anspruch 11, die Temperiervorrichtung gemäß Anspruch 13, das Verfahren gemäß Anspruch 15 sowie die Blasextrusionsvorrichtung gemäß Anspruch 21 gelöst. Weitere Merkmale und Details der Erfindung ergeben sich aus der Beschreibung und den Zeichnungen. Dabei gelten Merkmale und Details, die im Zusammenhang mit dem Blaskopf beschrieben sind, selbstverständlich auch im Zusammenhang mit der erfindungsgemäßen Düsenvorrichtung, dem erfindungsgemäßen Grundkörper, der erfindungsgemäßen Temperiervorrichtung, dem erfindungsgemäßen Verfahren, der erfindungsgemäßen Blasextrusionsvorrichtung und jeweils umgekehrt, sodass bezüglich der Offenbarung zu den einzelnen Erfindungsaspekten stets wechselseitig Bezug genommen wird bzw. werden kann.

Gemäß eines ersten Aspekts der vorliegenden Erfindung wird ein Blaskopf für eine Blasextrusionsvorrichtung zur Herstellung einer Blasfolie aus einer Materialschmelze zur Verfügung gestellt. Der Blaskopf weist eine Düsenvorrichtung in einem Kopfabschnitt des Blaskopfes mit einer Austrittsöffnung zum Auslassen der Materialschmelze als Blasfolie auf. Die Düsenvorrichtung weist einen Schmelzkanal zum Fördern der Materialschmelze zur Austrittsöffnung und eine Temperiervorrichtung auf. Die Temperiervorrichtung ist ausgestaltet und angeordnet, um die Materialschmelze in der Düsenvorrichtung zu temperieren. Für eine Wärmetrennung zwischen einem durch die Temperiervorrichtung temperierbaren Temperierabschnitt der Düsenvorrichtung und einem Grundabschnitt des Blaskopfes, der in einer Strömungsrichtung der Materialschmelze stromaufwärts des Temperierabschnitts angeordnet ist, ist wenigstens ein erster Wärmetrennabschnitt zumindest teilweise zwischen dem Temperierabschnitt und dem Grundabschnitt ausgestaltet. Die Temperiervorrichtung weist eine Kühlvorrichtung zum Kühlen der Materialschmelze und eine Heizvorrichtung zum Heizen der Materialschmelze aufweist. D.h., der Wärmetrennabschnitt ist entsprechend stromaufwärts von sowohl der Kühlvorrichtung als auch der Heizvorrichtung angeordnet. Ferner ist die Kühlvorrichtung in einer Strömungsrichtung der Materialschmelze stromaufwärts der Heizvorrichtung angeordnet.

Hierbei ist die Heizvorrichtung bevorzugt näher an der Austrittsöffnung als die Kühlvorrichtung angeordnet. Dadurch kann die Materialschmelze zunächst stark abgekühlt werden, wodurch die Materialeigenschaften der aus der Düsenvorrichtung austretenden Materialschmelze bzw. Blasfolie dahingehend verändert werden können, dass eine besonders hohe Ausstoßgeschwindigkeit und -leistung erreicht werden kann. Dadurch, dass die Heizvorrichtung stromabwärts der Kühlvorrichtung angeordnet ist, kann die Materialschmelze, bevor sie die Düsenvorrichtung durch die Austrittsöffnung als Blasfolie verlässt, derart geheizt werden, dass der unerwünschte Schmelzbrucheffekt verhindert oder zumindest weitestgehend vermieden werden kann. Somit ist eine hohe Ausstoßleistung bei einer gleichzeitig hohen Blasfolienqualität erzielbar. Wenn die Kühlvorrichtung in Strömungsrichtung der Materialschmelze stromaufwärts der Heizvorrichtung angeordnet ist, ist bevorzugt auch der Kühlabschnitt des Grundkörpers in Strömungsrichtung der Materialschmelze stromaufwärts des Heizabschnitts angeordnet bzw. ausgestaltet. Der zweite Wärmetrennabschnitt ist hierbei in Strömungsrichtung der Materialschmelze bevorzugt zwischen dem Kühlabschnitt und dem Heizabschnitt ausgestaltet. Durch die Kühlvorrichtung und die Heizvorrichtung kann die Materialschmelze für eine vorteilhafte Qualität der Blasfolie gezielt temperiert werden. Der Kühlabschnitt bzw. ein entsprechender Wandabschnitt eines Grundkörpers der Düsenvorrichtung kann hierbei gezielt bevorzugt bis zu einer Einfriergrenze bzw. einer Einfriertemperatur der Materialschmelze heruntergekühlt werden.

Die Wärmeleitung innerhalb der Düsenvorrichtung, die bevorzugt Metall, insbesondere einen Stahl aufweist, ist deutlich höher als im Kunststoff der Materialschmelze. Demnach ist ein Wärmetransport innerhalb der Düsenvorrichtung, beispielsweise im Temperierabschnitt, deutlich höher als von der Düsenvorrichtung bzw. dem Temperierabschnitt in die Materialschmelze hinein. Durch den erfindungsgemäßen ersten Wärmetrennabschnitt kann ein Wärmetransport zwischen dem Temperierabschnitt und dem Grundabschnitt des Blaskopfes zuverlässig verringert werden. Ein Transport der Wärme von dem Temperierabschnitt in andere Bauteile bzw. Abschnitte des Blaskopfes kann entsprechend stark reduziert werden. Dadurch kann die Materialschmelze lokal besonders gezielt temperiert werden. Die Düsenvorrichtung bildet bevorzugt einen Düsenlippenabschnitt oder ist zumindest in einem Düsenlippenabschnitt angeordnet.

Unter dem Grundabschnitt ist vorliegend insbesondere der restliche Abschnitt des Blaskopfes neben dem Kopfabschnitt zu verstehen, der nicht die Düsenvorrichtung aufweist. Der Grundabschnitt weist bevorzugt einen Basiskörper mit einem Extruder sowie insbesondere einen Verteiler- bzw. Verschwenkbereich auf. Im Bereich des Basiskörpers sind Temperaturbrücken ebenfalls zu vermeiden, da dies zu Problemen bei einer Verteilung und der Verweilzeit der Materialschmelze im Verteiler- bzw. Verschwenkbereich führen kann.

Da ein Wärmetransport von dem Temperierabschnitt in den Grundabschnitt negative Auswirkungen auf die Qualität der Blasfolie hat, dient der erste Wärmetrennabschnitt ferner dem Schutz vor einer entsprechend minderwertig hergestellten Blasfolie. Der Wärmetrennabschnitt trennt grundsätzlich den Kopfabschnitt vom Grundabschnitt bzw. bildet eine Wärmetrennung zwischen dem Kopfabschnitt und dem Grundabschnitt.

Unter einer Wärmetrennung ist vorliegend eine Reduzierung eines Wärmetransports von einem Bereich, beispielsweise dem Kopfabschnitt bzw. dem Temperierabschnitt, in einen anderen Bereich, beispielsweise den Grundabschnitt, zu verstehen. Durch den erfindungsgemäßen ersten Wärmetrennabschnitt ist es möglich, im Vergleich zu einem Blaskopf ohne den erfindungsgemäßen Wärmetrennabschnitt den Wärmetransport von dem Temperierabschnitt in Richtung des Grundabschnitts bei einer Temperierung der Materialschmelze um mehr als 50%, bei einer bevorzugten Ausgestaltung des ersten Wärmetrennabschnitts, um mehr als 80% oder sogar um mehr als 90% zu reduzieren. D.h., im Vergleich zu einem herkömmlichen Blaskopf kann vorliegend bei einer Temperierung der Materialschmelze der Wärmeübergang zwischen dem Temperierabschnitt und dem Grundabschnitt um mehr als 90% reduziert werden.

Der wenigstens eine erste Wärmetrennabschnitt ist bevorzugt als ein Ringspalt zwischen dem Kühlabschnitt und dem Grundabschnitt oder zumindest im Querschnitt des Grundkörpers als wenigstens eine Nut zwischen dem Kühlabschnitt und dem Grundabschnitt ausgestaltet. D.h., zwischen dem Kühlabschnitt und dem Grundabschnitt bildet der erste Wärmetrennabschnitt eine mit beispielsweise Umgebungsluft gefüllte und entsprechend wärmeisolierende Lücke. Wie bereits vorstehend erwähnt, ist die Wärmetrennung in Form eines Luftspalts bzw. des entsprechend ausgestalteten Ringspalts oder der wenigstens einen Nut eine besonders kostengünstige und einfache Lösung zum Herstellen der gewünschten Wärmetrennung.

Bei einem Blaskopf ist es weiterhin möglich, dass die Kühlvorrichtung und/oder die Heizvorrichtung ringförmig ausgestaltet und in einer Umfangsrichtung segmentiert und einzeln ansteuerbar ausgestaltet ist. Dadurch kann ein Foliendickenprofil der Blasfolie vorteilhaft geregelt werden.

Darüber hinaus kann die Düsenvorrichtung einen Grundkörper mit einer Austrittsöffnung zum Auslassen der Materialschmelze als Blasfolie aufweisen, wobei der Grundkörper einen Schmelzkanal zum Fördern der Materialschmelze zur Austrittsöffnung bildet. Die Düsenvorrichtung weist ferner eine Temperiervorrichtung auf, wobei die Temperiervorrichtung eine Kühlvorrichtung zum Kühlen der Materialschmelze und eine Heizvorrichtung zum Heizen der Materialschmelze aufweist. Außerdem ist für eine Wärmetrennung zwischen einem durch die Kühlvorrichtung kühlbaren Kühlabschnitt des Grundkörpers und einem durch die Heizvorrichtung heizbaren Heizabschnitt des Grundkörpers wenigstens ein zweiter Wärmetrennabschnitt zumindest teilweise zwischen dem Kühlabschnitt und dem Heizabschnitt ausgestaltet.

Durch die aus dem zweiten Wärmetrennabschnitt resultierende Wärmetrennung zwischen dem durch die Kühlvorrichtung kühlbaren Kühlabschnitt und dem durch die Heizvorrichtung heizbaren Heizabschnitt ist es möglich, den Kühlabschnitt durch die Kühlvorrichtung und/oder den Heizabschnitt durch die Heizvorrichtung deutlich über ein bekanntes Maß hinaus zu kühlen bzw. zu heizen, ohne einen unerwünschten Wärmeübergang zwischen dem Kühlabschnitt und dem Heizabschnitt hervorzurufen. D.h., die Materialschmelze kann im Kühlabschnitt stark abgekühlt werden und im Heizabschnitt trotzdem gezielt geheizt werden. Durch ein derart gezieltes Temperieren, d.h., eine definierte örtliche Begrenzung beim Kühlen und Heizen der Materialschmelze, kann bei großer Ausstoßleistung ein etwaiger Schmelzbruch verhindert oder zumindest stark reduziert werden.

Der Grundkörper sowie der Schmelzkanal sind zum Ausgeben einer schlauchförmigen Blasfolie bevorzugt ringförmig ausgestaltet. Entsprechend ist auch die Austrittsöffnung ringförmig ausgestaltet. Hierbei weist der Kühlabschnitt einen inneren Kühlabschnitt und einen äußeren Kühlabschnitt auf. Der innere Kühlabschnitt ist zum Kühlen einer Innenseite der Materialschmelze ausgestaltet und der äußere Kühlabschnitt ist zum Kühlen einer Außenseite der Materialschmelze ausgestaltet. Entsprechend weist hierbei der Heizabschnitt einen inneren Heizabschnitt und einen äußeren Heizabschnitt auf. Der innere Heizabschnitt ist zum Heizen der Innenseite der Materialschmelze ausgestaltet und der äußere Heizabschnitt ist zum Heizen der Außenseite der Materialschmelze ausgestaltet. Hierbei ist es bevorzugt, wenn der Heizabschnitt in eine Richtung weg vom Schmelzkanal thermisch isoliert ist. Die thermische Isolierung kann beispielsweise mittels einer PTFE-Einheit realisiert werden. Dadurch kann der Schmelzkanal bzw. die Materialschmelze im Schmelzkanal gezielt geheizt werden. Die Heizvorrichtung ist bevorzugt als Widerstandsheizung ausgestaltet. Die Heizvorrichtung sowie die Kühlvorrichtung können ferner über ein Peletier-Element betrieben werden, das entsprechend angeordnet ist. Die Kühlvorrichtung wird bevorzugt mit Öl, Wasser und/oder Luft betrieben. D.h., die Kühlvorrichtung kann als Öl-Kühlvorrichtung, Wasser-Kühlvorrichtung und/oder Luft-Kühlvorrichtung ausgestaltet sein.

Unter dem Kühlen und Heizen der Innenseite sowie der Außenseite der Materialschmelze ist insbesondere eine Einflussnahme auf die Temperatur des zugehörigen seitlichen Materials der Materialschmelze zu verstehen. Selbstverständlich wird dabei nicht nur die Seitenfläche der Materialschmelze beeinflusst, sondern durch Wärmeleitung auch eine Temperaturbeeinflussung des zugehörigen Volumenabschnitts der Seite der Materialschmelze erzeugt. Innenseite und Außenseite der Materialschmelze können hierbei durch eine entsprechend unabhängige Ansteuerung der einzelnen Kühlabschnitte und Heizabschnitte getrennt und unabhängig voneinander gekühlt und geheizt werden. D.h. es kann von beiden Seiten der Materialschmelze eine unterschiedliche Temperierung vorgenommen werden, so dass beispielsweise eine der beiden Seiten eine kühlere Temperatur als die andere der beiden Seiten aufweisen kann. Dementsprechend kann eine Beeinflussung der Temperatur von beiden Seiten beispielsweise in derart unterschiedlicher Weise erfolgen, dass entsprechende Viskositätsunterschiede in der Materialschmelze ausgleichbar sind.

Unter dem Kühlen und Heizen der Materialschmelze ist im Sinne der vorliegenden Erfindung sowohl ein aktives, als auch ein passives Kühlen bzw. Heizen zu verstehen. So kann z. B. nur die mit der Innenfläche korrespondierende Seite gekühlt oder geheizt werden, während die gegenüberliegende Seite, welche mit der Außenfläche korrespondiert, nicht gekühlt oder geheizt wird.

Ferner ist es möglich, dass bei einem Blaskopf der wenigstens eine zweite Wärmetrennabschnitt als ein Ringspalt zwischen dem Kühlabschnitt und dem Heizabschnitt oder zumindest im Querschnitt des Grundkörpers als wenigstens eine Nut zwischen dem Kühlabschnitt und dem Heizabschnitt ausgestaltet ist. D.h., zwischen dem Kühlabschnitt und dem Heizabschnitt bildet der zweite Wärmetrennabschnitt eine mit beispielsweise Umgebungsluft gefüllte und entsprechend wärmeisolierende Lücke. Dies führt dazu, dass die von der Kühlvorrichtung ausgehende Temperatur lokal in den Kühlabschnitt übergeht bzw. auf diesen begrenzt wird. Entsprechend führt dies dazu, dass die von der Heizvorrichtung ausgehende Temperatur lokal in den Heizabschnitt übergeht bzw. auf diesen begrenzt wird. Die Wärmetrennung in Form eines Luftspalts bzw. des entsprechend ausgestalteten Ringspalts oder der wenigstens einen Nut ist eine besonders kostengünstige und einfache Lösung zum Herstellen der gewünschten Wärmetrennung.

Außerdem ist es denkbar, dass bei einem Blaskopf der wenigstens eine zweite Wärmetrennabschnitt einen wärmeisolierenden Festkörper aufweist, der zumindest abschnittsweise zwischen dem Kühlabschnitt und dem Heizabschnitt angeordnet ist. Ein Festkörper zwischen dem Kühlabschnitt und dem Heizabschnitt trägt zu einer hohen Stabilität des Grundkörpers bei. Gleichwohl ist es durch den wärmeisolierenden Festkörper möglich, dass die von der Kühlvorrichtung ausgehende Temperatur lokal in den Kühlabschnitt übergeht bzw. auf diesen begrenzt wird. Entsprechend ist es durch den wärmeisolierenden Festkörper möglich, dass die von der Heizvorrichtung ausgehende Temperatur lokal in den Heizabschnitt übergeht bzw. auf diesen begrenzt wird. Der wärmeisolierende Festkörper weist einen Werkstoff mit wärmeisolierenden Eigenschaften, bevorzugt eine Keramik, auf, oder besteht aus diesem Werkstoff.

Außerdem ist es möglich, dass bei einem Blaskopf der wenigstens eine erste Wärmetrennabschnitt einen wärmeisolierenden Festkörper aufweist, der zumindest abschnittsweise zwischen dem Temperierabschnitt und dem Grundabschnitt angeordnet ist. Wie bereits vorstehend zum zweiten Wärmetrennabschnitt erläutert, trägt ein Festkörper zwischen dem Kühlabschnitt und dem Heizabschnitt zu einer weiterhin hohen Stabilität des Grundkörpers bzw. der Düsenvorrichtung bei. Der wärmeisolierende Festkörper im ersten Wärmetrennabschnitt weist ebenfalls einen Werkstoff mit wärmeisolierenden Eigenschaften, bevorzugt eine Keramik, auf, oder besteht aus diesem Werkstoff.

Weiter kann vorgesehen sein, dass bei einem Blaskopf der Kühlabschnitt in einem Bereich am Schmelzkanal eine Höhe zwischen 50 mm und 120 mm, insbesondere eine Höhe zwischen 50 mm und 100 mm aufweist. Es hat sich herausgestellt, dass diese Höhe besonders geeignet ist, um die Materialschmelze bei entsprechender Kühlung durch den Kühlabschnitt auf die gewünschte Temperatur zu bringen. Als besonders bevorzugt hat sich eine Höhe zwischen 80 mm und 100 mm herausgestellt.

Von besonderem Vorteil kann es sein, dass bei einem Blaskopf der Heizabschnitt in einem Bereich am Schmelzkanal eine Höhe zwischen 10 mm und 30 mm aufweist. Es hat sich herausgestellt, dass diese Höhe besonders geeignet ist, um die Materialschmelze bei entsprechender Heizung durch den Heizabschnitt auf die gewünschte Temperatur zu bringen und dadurch einen Schmelzbruch zu verhindern. Als besonders bevorzugt hat sich eine Höhe zwischen 15 mm und 25 mm herausgestellt.

Darüber hinaus ist es möglich, dass der Heizabschnitt in einer Strömungsrichtung der Materialschmelze eine Höhe aufweist, die weniger als 50%, insbesondere weniger als 30%, der Höhe des Kühlabschnitts in der Strömungsrichtung der Materialschmelze ist. Da der Heizabschnitt insbesondere dazu ausgestaltet ist, die Materialschmelze kurz vor der Ausgabe durch die Austrittsöffnung zu erhitzen, um den Schmelzbrucheffekt zu verhindern, reicht eine entsprechend kurze Ausgestaltung des Heizabschnitts aus. Der Kühlabschnitt sollte dagegen im Verhältnis zum Heizabschnitt deutlich länger bzw. höher ausgestaltet sein, um die gewünschte Abkühlung der Materialschmelze zu erzielen.

Gemäß einer Weiterbildung weist bei einem Blaskopf der Schmelzkanal, insbesondere in einem Bereich am Kühlabschnitt, eine Verjüngung und, insbesondere in einem Bereich am Heizabschnitt, eine Verbreiterung, insbesondere zur Austrittsöffnung hin, auf. Die Verjüngung ist hierbei bevorzugt in Strömungsrichtung der Materialschmelze stromabwärts der Verbreiterung ausgestaltet. Eine derartige Formgebung des Schmelzkanals im Grundkörper hat gezeigt, dass dadurch Materialablagerungen der Materialschmelze an der Austrittsöffnung, die zu einem sogenannten Düsenbart führen, verhindert werden können. Unter einer Verjüngung ist vorliegend eine Verkleinerung des Durchgangsquerschnitts des Schmelzkanals zu verstehen. Unter einer Verbreiterung ist vorliegend eine Vergrößerung des Durchgangsquerschnitts zu verstehen. Gleichwohl ist der Querschnitt der Austrittsöffnung dabei bevorzugt kleiner bzw. deutlich kleiner als ein Querschnitt im Kühlkanal.

Ferner ist es denkbar, dass der Grundkörper bzw. die Düsenvorrichtung einen Düsenlippenabschnitt aufweist und die Heizvorrichtung und/oder die Kühlvorrichtung am oder im Düsenlippenabschnitt angeordnet sind. Eine Düsenlippe ist der Abschnitt um eine Düsenöffnung bzw. die Austrittsöffnung herum. In diesem Bereich ist die Beeinflussungswirkung der Temperierung am größten, da in diesem Bereich die Materialschmelze mit der Austrittstemperatur vorliegt. Hier kann deshalb am effizientesten die Beeinflussung der Temperaturen der beiden Seiten der Materialschmelze erzielt werden.

Von weiterem Vorteil kann es sein, dass bei einem Blaskopf bzw. einer Düsenvorrichtung eine Schmelzkanalfläche des Kühlabschnitts einen Reibungskoeffizienten in einem Bereich von 0,03 bis 0,07 aufweist. Dadurch können Materialanhaftungen der strömenden Materialschmelze am Kühlabschnitt zuverlässig vermieden werden, obwohl der Kühlabschnitt, oder eine Kühlmitteltemperatur für die Kühlvorrichtung zum Kühlen des Kühlabschnitts, deutlich unterhalb des Schmelzpunktes der Materialschmelze eingestellt ist. Ein besonders vorteilhaftes Kosten/Nutzen-Verhältnis hat sich für eine Materialbeschichtung der Schmelzkanalfläche des Kühlabschnitts mit einem Reibungskoeffizienten in einem Bereich von 0,04 bis 0,06 herausgestellt.

Außerdem kann es von Vorteil sein, dass bei einem Blaskopf die Kühlvorrichtung zumindest abschnittsweise im Kühlabschnitt angeordnet ist und/oder die Heizvorrichtung zumindest abschnittsweise im Heizabschnitt angeordnet ist. D.h., die Kühlvorrichtung und/oder die Heizvorrichtung sind zumindest abschnittsweise innerhalb des Grundkörpers angeordnet. Dadurch kann die Düsenvorrichtung besonders platzsparend ausgestaltet sein.

Darüber hinaus ist bei einem Blaskopf ein Controller zum Steuern und/oder Regeln der Düsenvorrichtung angeordnet, wobei die Kühlvorrichtung und die Heizvorrichtung durch den Controller ansteuerbar, insbesondere getrennt voneinander ansteuerbar, sind. Dadurch kann ein Temperieren der Materialschmelze, ggf. mittels geeigneter Temperatursensoren, automatisch geregelt bzw. gesteuert werden. Der Controller weist hierzu beispielsweise eine ECU auf, die mit den Temperatursensoren der Düsenvorrichtung oder einer Blasextrusionsvorrichtung in Kommunikationsverbindung steht. Wie bereits vorstehend erwähnt, sind der Grundkörper sowie der Schmelzkanal zum Ausgeben einer schlauchförmigen Blasfolie bevorzugt ringförmig ausgestaltet. Entsprechend ist auch die Austrittsöffnung ringförmig ausgestaltet. Der innere Kühlabschnitt ist zum Kühlen einer Innenseite der Materialschmelze ausgestaltet und der äußere Kühlabschnitt ist zum Kühlen einer Außenseite der Materialschmelze ausgestaltet. Entsprechend weist hierbei der Heizabschnitt einen inneren Heizabschnitt und einen äußeren Heizabschnitt auf. Der innere Heizabschnitt ist zum Heizen der Innenseite der Materialschmelze ausgestaltet und der äußere Heizabschnitt ist zum Heizen der Außenseite der Materialschmelze ausgestaltet. Der Controller ist nun bevorzugt derart ausgestaltet und modifiziert, dass die Innenseite der Materialschmelze bei der Herstellung einer Blasfolie anders gekühlt und/oder geheizt wird, als die Außenseite der Materialschmelze. Dies kann insbesondere bei der Herstellung von Mehrschichtfolien von Vorteil sein, bei welchen gegebenenfalls eine Innenseite anders als eine Außenseite temperiert werden soll, um beispielsweise Verspannungen und einen daraus folgenden Folienriss zu vermeiden. Außerdem ist es dadurch möglich, dass etwaige Viskositätsunterschiede in der Materialschmelze ausgleichbar sind.

Ebenfalls vorteilhaft kann es sein, wenn bei einem Blaskopf der Kühlabschnitt ein Material mit einer Wärmeleitfähigkeit von mehr als 200 W/(m*K) aufweist. Dadurch kann ein gewünschter Wärmeübergang von der Kühlvorrichtung durch den Kühlabschnitt zur Materialschmelze gewährleistet werden. Ferner ist es denkbar, dass der gesamte Grundkörper bzw. das Material desselben eine Wärmeleitfähigkeit von mehr als 200 W/(m*K) aufweist.

Ferner ist es möglich, dass bei einem Blaskopf bzw. der Düsenvorrichtung der Grundkörper einstückig ausgestaltet ist. Dies führt zu niedrigen Herstellungskosten für den Grundkörper. Außerdem kann die Düsenvorrichtung dadurch besonders einfach zusammengebaut werden. Darüber hinaus ist die Düsenvorrichtung mit einem einstückigen Grundkörper im Vergleich zu einer Düsenvorrichtung mit einem aus mehreren Einzelteilen zusammengebauten Grundkörper weniger Fehler- und/oder Wartungsanfällig.

Weiterhin ist es möglich, dass der erste Wärmetrennabschnitt und/oder der zweite Wärmetrennabschnitt jeweils eine Höhe von weniger als 10 mm, bevorzugt von weniger als 5 mm aufweisen. Durch eine derartige Ausgestaltung des Grundkörpers bzw. der jeweiligen Wärmetrennabschnitte kann ein Wärmeübergang zwischen dem Kühlabschnitt und dem Heizabschnitt zuverlässig verhindert bzw. reduziert werden. Unter der Höhe ist vorliegend eine Höhe in Richtung einer Strömungsrichtung der Materialschmelze zu verstehen. Unter einer Breite ist vorliegend eine Richtung orthogonal oder im Wesentlichen orthogonal zu einer Strömungsrichtung der Materialschmelze zu verstehen. In Richtung dieser Breite weist der Grundkörper im Bereich des Wärmetrennabschnitts bevorzugt eine Dicke von weniger als 10 mm, besonders bevorzugt von weniger als 5 mm, beispielsweise 3 mm oder weniger, auf. Hierdurch kann eine Wärmetrennung erzielt werden, die zur wunschgemäßen Wärmetrennung zwischen dem Kühlabschnitt und dem Heizabschnitt bzw. zwischen dem Kühlabschnitt und dem Grundkörper führt. Die Wärmetrennabschnitte können grundsätzlich beliebig dimensioniert werden.

Gemäß eines weiteren Aspekts der vorliegenden Erfindung wird eine Düsenvorrichtung für einen wie vorstehend beschriebenen Blaskopf bereitgestellt. Die Düsenvorrichtung weist einen Grundkörper mit einer Austrittsöffnung zum Auslassen der Materialschmelze als Blasfolie auf, wobei der Grundkörper einen Schmelzkanal zum Fördern der Materialschmelze zur Austrittsöffnung bildet. Außerdem weist die Düsenvorrichtung eine Temperiervorrichtung auf, wobei die Temperiervorrichtung eine Kühlvorrichtung zum Kühlen der Materialschmelze und eine Heizvorrichtung zum Heizen der Materialschmelze aufweist. Für eine Wärmetrennung zwischen einem durch die Kühlvorrichtung kühlbaren Kühlabschnitt des Grundkörpers und einem durch die Heizvorrichtung heizbaren Heizabschnitt des Grundkörpers ist wenigstens ein zweiter Wärmetrennabschnitt zumindest teilweise zwischen dem Kühlabschnitt und dem Heizabschnitt ausgestaltet. Damit bringt die erfindungsgemäße Düsenvorrichtung die gleichen Vorteile mit sich, wie sie ausführlich mit Bezug auf den erfindungsgemäßen Blaskopf beschrieben worden sind. Die Düsenvorrichtung kann dabei selbstverständlich auch entsprechend der vorstehend im Detail beschriebenen Düsenvorrichtung weitergebildet sein. Der zweite Wärmetrennabschnitt beschränkt die vorliegende Erfindung dabei nicht auf das Erfordernis von wenigstens zwei Wärmetrennabschnitten. Der Begriff "zweiter" dient hier lediglich für eine bessere Unterscheidung zum ersten Wärmetrennabschnitt, weshalb der Begriff "zweiter" an dieser Stelle auch gestrichen werden könnte.

Darüber hinaus wird gemäß eines weiteren Aspekts der vorliegenden Erfindung ein Grundkörper zur Verwendung in einem wie vorstehend beschriebenen Blaskopf bzw. einer Düsenvorrichtung bereitgestellt, wobei der Grundkörper eine Austrittsöffnung zum Auslassen einer Materialschmelze als Blasfolie aufweist und einen Schmelzkanal zum Fördern der Materialschmelze zur Austrittsöffnung bildet. Für eine Wärmetrennung zwischen einem kühlbaren Kühlabschnitt des Grundkörpers und einem heizbaren Heizabschnitt des Grundkörpers ist wenigstens ein erster Wärmetrennabschnitt zumindest teilweise zwischen dem Kühlabschnitt und dem Heizabschnitt ausgestaltet. Hierbei ist es möglich, dass der wenigstens eine zweite Wärmetrennabschnitt als ein Ringspalt zwischen dem Kühlabschnitt und dem Heizabschnitt oder zumindest im Querschnitt des Grundkörpers als wenigstens eine Nut zwischen dem Kühlabschnitt und dem Heizabschnitt ausgestaltet ist. Damit bringt der erfindungsgemäße Grundkörper die gleichen Vorteile mit sich, wie sie ausführlich mit Bezug auf den erfindungsgemäßen Blaskopf bzw. die Düsenvorrichtung beschrieben worden sind.

Außerdem wird gemäß der vorliegenden Erfindung eine Temperiervorrichtung zum Temperieren einer Materialschmelze in einem wie vorstehend im Detail beschriebenen Blaskopf und/oder in einer Düsenvorrichtung zur Verfügung gestellt. Die Temperiervorrichtung weist wenigstens zwei Temperiermodule auf, wobei wenigstens ein erstes Temperiermodul als Kühlmodul betreibbar ist und wenigstens ein zweites Temperiermodul als Heizmodul betreibbar ist, und wobei für eine Wärmetrennung zwischen dem wenigstens einen ersten Temperiermodul und dem wenigstens einen zweiten Temperiermodul wenigstens ein Wärmetrennabschnitt zumindest teilweise zwischen dem wenigstens einen ersten Temperiermodul und dem wenigstens einen zweiten Temperiermodul ausgestaltet ist. Die Temperiervorrichtung bringt dabei die gleichen Vorteile mit sich, wie sie bereits vorstehend zu einer entsprechend ausgestalteten Temperiervorrichtung beschrieben worden sind. Die Temperiermodule können dabei jeweils wahlweise als Heizmodul oder Kühlmodul betrieben werden. D.h., ein Heizmodul kann zu einem anderen Zeitpunkt auch als Kühlmodul betrieben werden und ein Kühlmodul kann zu einem anderen Zeitpunkt auch als Heizmodul betrieben werden. Weitere Merkmale zur Temperiervorrichtung, beispielsweise bezüglich des Wärmetrennabschnitts, eines Ringspalts und/oder einer Isolierung der Temperiermodule können vorstehend aus der mit Bezug zum Blaskopf beschriebenen Temperiervorrichtung entnommen werden.

Bei einer Weiterbildung ist es möglich, dass die Temperiervorrichtung ringförmig ausgestaltet ist. Dadurch kann die Temperiervorrichtung besonders gut bzw. wirkungsvoll um den Schmelzkanal herum positioniert werden. Die Temperiervorrichtung ist dabei ringförmig oder im Wesentlichen ringförmig ausgestaltet, wobei die Ringform nicht auf eine kreisrunde Ringform beschränkt ist sondern auch elliptisch oder eckig ausgestaltet sein kann. Die ringförmige Temperiervorrichtung kann sowohl in einem Basiskörper des Blaskopfes als auch in einem Düsenabschnitt des Blaskopfes um den Schmelzkanal herum positioniert werden bzw. sein. D.h., eine Heizvorrichtung nimmt in der Temperiervorrichtung einen größeren Teil als eine Kühlvorrichtung ein .Im Basiskörper des Blaskopfes ist die Temperiervorrichtung überwiegend als Heizvorrichtung ausgestaltet. Im Düsenabschnitt ist die Temperiervorrichtung überwiegend als Kühlvorrichtung ausgestaltet. D.h., eine Kühlvorrichtung nimmt in der Temperiervorrichtung einen größeren Teil als eine Heizvorrichtung ein. In diesem Fall kann es außerdem von Vorteil sein, wenn zwischen den Kühlmodulen jeweils zumindest abschnittsweise ein Wärmetrennabschnitt ausgestaltet ist. D.h., die jeweiligen Kühlmodule sind in diesem Fall durch eine Isoliervorrichtung zueinander thermisch isoliert ausgestaltet. Dadurch kann ein Kühlmittelstrom individuell auf Temperatur und/oder Volumenstrom gesteuert und/oder geregelt werden. Ferner kann dadurch eine bessere Schmelzstabilität der Materialschmelze an der Austrittsöffnung erzielt werden. Die Kühlmodule sind dabei bevorzugt außen und/oder innen über ihren Umfang segmentiert und einzeln ansteuerbar ausgeführt. Dadurch kann ein Foliendickenprofil über den Umfang besonders gut geregelt werden.

Von weiterem Vorteil kann es sein, wenn das wenigstens eine erste Temperiermodul und das wenigstens eine zweite Temperiermodul zumindest abschnittsweise radial nebeneinander angeordnet sind und die Wärmetrennung zwischen dem wenigstens einen ersten Temperiermodul und dem wenigstens einen zweiten Temperiermodul durch den wenigstens einen Wärmetrennabschnitt zumindest teilweise radial zwischen dem wenigstens einen ersten Temperiermodul und dem wenigstens einen zweiten Temperiermodul ausgestaltet ist. Dadurch ergeben sich die gleichen Vorteile, wie sie vorstehend mit Bezug auf die Isolierung zwischen den verschiedenen Temperiermodulen dargestellt worden sind.

Gemäß eines weiteren Aspekts der vorliegenden Erfindung wird ein Verfahren zur Herstellung einer Blasfolie aus einer Materialschmelze mit einem wie vorstehend dargestellten Blaskopf bzw. einer Düsenvorrichtung bereitgestellt. Bei dem Verfahren wird der Temperierabschnitt, insbesondere der Kühlabschnitt durch die Temperiervorrichtung bzw. die Kühlvorrichtung bei der Herstellung der Blasfolie zumindest abschnittsweise, insbesondere in einem Bereich am Schmelzkanal, auf eine Temperatur unter 80°C, insbesondere auf eine Temperatur unter 50°C temperiert. Damit bringt auch das erfindungsgemäße Verfahren die gleichen Vorteile mit sich, wie sie ausführlich mit Bezug auf den erfindungsgemäßen Blaskopf bzw. die Düsenvorrichtung beschrieben worden sind. Der Kühlabschnitt wird durch die Kühlvorrichtung bei der Herstellung der Blasfolie bevorzugt zumindest abschnittsweise, insbesondere in einem Bereich am Schmelzkanal, auf eine Temperatur von weniger als 50%, insbesondere auf eine Temperatur von weniger als 30% der Temperatur der Materialschmelze im Bereich des Schmelzkanals temperiert. Hierbei wird der Kühlabschnitt durch die Kühlvorrichtung bei der Herstellung der Blasfolie beispielsweise derart temperiert, dass die Materialschmelze am Kühlabschnitt um 5° bis 50°C, bevorzugt um 10°C bis 30°C gekühlt wird. Durch die erfindungsgemäße Ausgestaltung der Düsenvorrichtung, insbesondere durch die Kombination aus Kühlabschnitt, Wärmetrennabschnitt und Heizabschnitt, ist es möglich, die Materialschmelze am Kühlabschnitt stark abzukühlen ohne den Schmelzbrucheffekt zu verursachen.

Ferner ist es im Rahmen des Verfahrens möglich, dass der Temperierabschnitt, insbesondere der Kühlabschnitt, durch die Temperiervorrichtung bzw. die Kühlvorrichtung bei der Herstellung der Blasfolie zumindest abschnittsweise, insbesondere in einem Bereich am Schmelzkanal, derart temperiert wird, dass die Materialschmelze um mehr als 10% abgekühlt wird. Auch dieser Grad der Temperierung wird insbesondere durch die erfindungsgemäße Ausgestaltung des Blaskopfes bzw. der Düsenvorrichtung, insbesondere durch die Kombination aus dem Temperierabschnitt bzw. dem Kühlabschnitt, dem zweiten Wärmetrennabschnitt und dem Heizabschnitt, ermöglicht.

Bei einem möglichen Verfahren ist es dabei von Vorteil, wenn der Heizabschnitt durch die Heizvorrichtung bei der Herstellung der Blasfolie zumindest abschnittsweise, insbesondere in einem Bereich am Schmelzkanal, auf eine Temperatur temperiert wird, die höher, insbesondere um 1°C bis 3°C höher, als die Temperatur der Materialschmelze am Heizabschnitt ist. Durch eine solche Temperierung kann der Schmelzbrucheffekt verhindert oder zumindest im Wesentlichen verhindert werden.

Außerdem kann eine Eindringtiefe der Temperaturerhöhung in einem Bereich des Heizabschnitts um mehr als 50%, bevorzugt um mehr als 75%, besonders bevorzugt um mehr als 85% kürzer als ein Querschnitt der Materialschmelze in diesem Bereich des Heizabschnitts sein. D.h., bevorzugt wird nur die Oberfläche der Materialschmelze geheizt bzw. die Materialschmelze wird nicht "durchgeheizt". Um einen Schmelzbruch zu verhindern reicht es aus, wenn lediglich die Oberfläche bzw. ein oberer bzw. äußerer Bereich der Materialschmelze erhitzt wird, bevorzugt über die Schmelztemperatur der Materialschmelze. Die Eindringtiefe der Temperaturerhöhung in einem Bereich des Heizabschnitts kann bevorzugt um mehr als 90% kürzer als ein Querschnitt der Materialschmelze in diesem Bereich des Heizabschnitts sein.

Von weiterem Vorteil kann es sein, wenn bei einem Verfahren der Temperierabschnitt derart ausgestaltet und temperiert wird, dass die Materialschmelze bei der Herstellung der Blasfolie mit wenigstens zwei unterschiedlichen Fließgeschwindigkeit durch den Temperierabschnitt strömt. Hierbei ist es insbesondere von Vorteil, wenn der Kühlabschnitt und der Heizabschnitt derart ausgestaltet und temperiert werden, dass die Materialschmelze bei der Herstellung der Blasfolie durch den Heizabschnitt mit einer höheren Fließgeschwindigkeit als durch den Kühlabschnitt strömt, wobei die Fließgeschwindigkeit der Materialschmelze durch den Heizabschnitt bevorzugt 1,5-fach bis 15-fach, besonders bevorzugt 2-fach bis 10-fach höher als die Fließgeschwindigkeit der Materialschmelze durch den Kühlabschnitt ist. Bei Versuchen im Rahmen der vorliegenden Erfindung hat sich herausgestellt, dass in diesen Bereichen besonders gute Ergebnisse bezüglich der Qualität der Blasfolie erzielbar sind.

Gemäß eines weiteren Aspekts der vorliegenden Erfindung wird ein Verfahren zur Herstellung einer Blasfolie aus einer Materialschmelze mit einem Blaskopf zur Verfügung gestellt. Der Blaskopf weist eine Düsenvorrichtung mit einer Austrittsöffnung zum Auslassen der Materialschmelze als Blasfolie auf, wobei die Düsenvorrichtung einen Schmelzkanal zum Fördern der Materialschmelze zur Austrittsöffnung und eine Temperiervorrichtung aufweist. Die Temperiervorrichtung weist eine Kühlvorrichtung zum Kühlen der Materialschmelze und eine Heizvorrichtung zum Heizen der Materialschmelze auf. Die Düsenvorrichtung weist einen durch die Kühlvorrichtung kühlbaren Kühlabschnitt und einen durch die Heizvorrichtung heizbaren Heizabschnitt auf. Der Kühlabschnitt wird dabei durch die Kühlvorrichtung bei der Herstellung der Blasfolie zumindest abschnittsweise, insbesondere in einem Bereich am Schmelzkanal, auf eine Temperatur unter 80°C, insbesondere auf eine Temperatur unter 50°C, temperiert.

Gemäß eines weiteren Aspekts der vorliegenden Erfindung ist eine Blasextrusionsvorrichtung mit einem wie vorstehend beschriebenen Blaskopf, einer wie vorstehend dargestellten Düsenvorrichtung, einem wie vorstehend dargestellten Grundkörper und/oder einer wie vorstehend dargestellten Temperiervorrichtung und/oder zum Durchführen eines wie vorstehend dargestellten Verfahrens bereitgestellt. Demnach bringt auch die erfindungsgemäße Blasextrusionsvorrichtung die gleichen Vorteile mit sich, wie sie ausführlich mit Bezug auf den erfindungsgemäßen Blaskopf, die erfindungsgemäße Düsenvorrichtung, den erfindungsgemäßen Grundkörper, die erfindungsgemäße Temperiervorrichtung sowie das erfindungsgemäße Verfahren beschrieben worden sind.

Der Blaskopf kann in der Blasextrusionsvorrichtung für die Herstellung der Blasfolie in Gravitationsrichtung oder entgegen der Gravitationsrichtung ausgerichtet sein. D.h., die Blasfolie kann durch den entsprechend ausgerichteten Blaskopf in Gravitationsrichtung oder entgegen der Gravitationsrichtung ausgegeben werden.

Weitere, die Erfindung verbessernde Maßnahmen ergeben sich aus der nachfolgenden Beschreibung zu verschiedenen Ausführungsbeispielen der Erfindung, welche in den Figuren schematisch dargestellt sind. Sämtliche aus den Ansprüchen, der Beschreibung oder der Zeichnung hervorgehende Merkmale und/oder Vorteile, einschließlich konstruktiver Einzelheiten und räumlicher Anordnungen können sowohl für sich als auch in den verschiedenen Kombinationen erfindungswesentlich sein.

Es zeigen jeweils schematisch:
- Figur 1: einen Blaskopf gemäß einer ersten Ausführungsform,
- Figur 2: eine Düsenvorrichtung gemäß der in Fig. 1 dargestellten Ausführungsform
- Figur 3: eine Düsenvorrichtung gemäß einer zweiten Ausführungsform,
- Figur 4: eine Düsenvorrichtung gemäß einer dritten Ausführungsform,
- Figur 5: eine Düsenvorrichtung gemäß einer vierten Ausführungsform,
- Figur 6: eine Düsenvorrichtung gemäß einer fünften Ausführungsform,
- Figur 7: eine Temperiervorrichtung gemäß einer ersten Ausführungsform,
- Figur 8: eine Temperiervorrichtung gemäß einer ersten Ausführungsform,
- Figur 9: eine Temperiervorrichtung gemäß einer dritten Ausführungsform,
- Figur 10: einen Abschnitt einer Blasextrusionsvorrichtung, und
- Figur 11: ein Diagramm zum Darstellen einer Temperierung einer Materialschmelze gemäß eines Verfahrens.

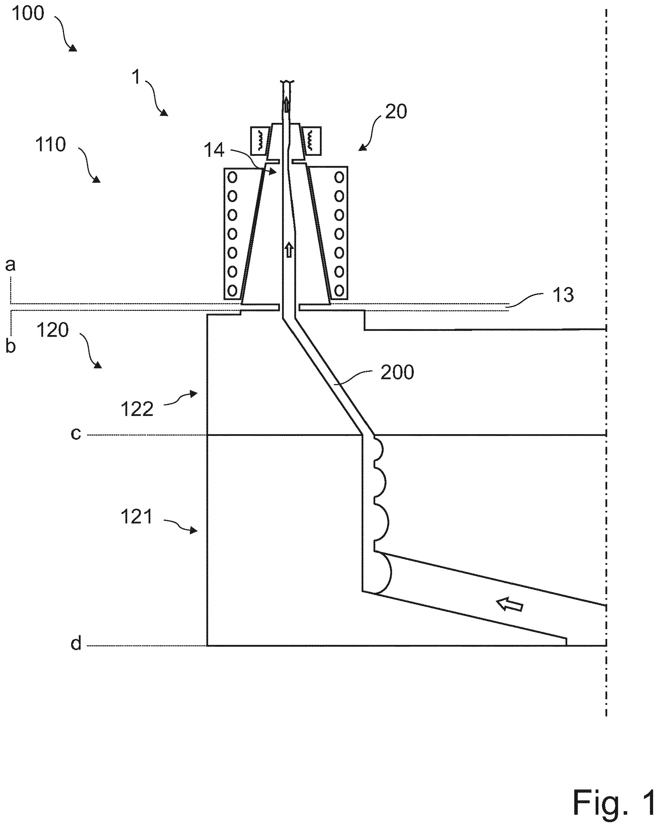

Elemente mit gleicher Funktion und Wirkungsweise sind in den Figuren 1 bis 11 jeweils mit denselben Bezugszeichen versehen.

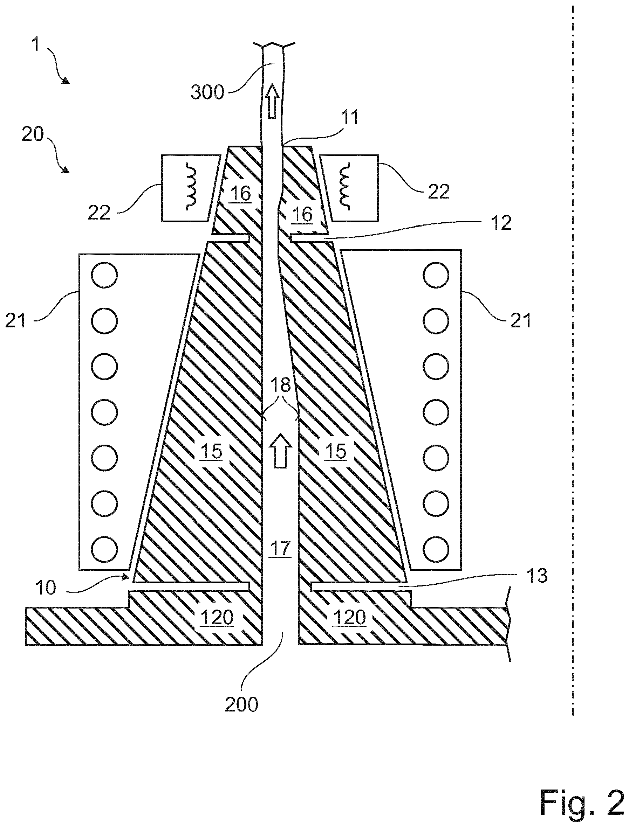

Fig. 1 zeigt einen Blaskopf 100 für eine Blasextrusionsvorrichtung 1000 zur Herstellung einer Blasfolie 300 aus einer Materialschmelze 200. Der Blaskopf 100 weist einen Kopfabschnitt 110 und einen Grundabschnitt 120 auf, wobei der Grundabschnitt 120 einen Basiskörper 121 und einen Schwenkkörper 122 aufweist. Der Kopfabschnitt 110 befindet sich in Fig. 1 über der Trennlinie a. Der Schwenkkörper 122 befindet sich zwischen den Trennlinien b und c. Der Basiskörper 121 befindet sich unter der Trennlinie c. Der Blaskopf 100 weist im Kopfabschnitt 110 eine Düsenvorrichtung 1 auf, die mit Bezug auf die Figuren 2 bis 6 im Detail beschrieben wird. Die Düsenvorrichtung 1 weist eine Temperiervorrichtung 20 auf, die zum Temperieren der Materialschmelze 200 in der Düsenvorrichtung 1 ausgestaltet und angeordnet ist. Für eine Wärmetrennung bzw. eine Reduzierung eines Wärmetransportes zwischen dem Kopfabschnitt 110 bzw. einem durch die Temperiervorrichtung 20 temperierbaren Temperierabschnitt 14 der Düsenvorrichtung 1 und dem Grundabschnitt 120 des Blaskopfes 100, der in einer Strömungsrichtung der Materialschmelze 200 stromaufwärts des Temperierabschnitts 14 angeordnet ist, ist ein erster Wärmetrennabschnitt 13 zwischen dem Temperierabschnitt 14 und dem Grundabschnitt 120 ausgestaltet. Wie in Fig. 1 durch die Trennlinien a und b zu erkennen ist, trennt der erste Wärmetrennabschnitt 13 den Kopfabschnitt 110 bzw. den Temperierabschnitt 14 teilweise vom Grundabschnitt 120. D.h., der Wärmetrennabschnitt 13 wird durch die Trennlinien a und b markiert. Der Kopfabschnitt 110 wird an seinem unteren Ende bzw. an einem Ende entgegen der Strömungsrichtung der Materialschmelze 200 durch den Temperierabschnitt 14 bzw. einen Kühlabschnitt 15 begrenzt.

Der erste Wärmetrennabschnitt 13 ist gemäß der in Fig. 1 dargestellten Ausführungsform als ein Ringspalt zwischen dem Temperierabschnitt 14 und dem Grundabschnitt 120 bzw. im Querschnitt als zwei Nuten bzw. Einstiche zwischen dem Temperierabschnitt 14 und dem Grundabschnitt 120 ausgestaltet.

In Fig. 2 ist schematisch eine Düsenvorrichtung 1 zur Herstellung einer Blasfolie 300 aus einer Materialschmelze 200 gemäß der in Fig. 1 dargestellten Ausführungsform dargestellt. Die Düsenvorrichtung 1 weist einen einstückigen bzw. monolithisch hergestellten Grundkörper 10 mit einer Austrittsöffnung 11 zum Auslassen der Materialschmelze 200 als Blasfolie 300 auf. Der Grundkörper 10 bildet ferner einen Schmelzkanal 17 zum Fördern der Materialschmelze 200 zur Austrittsöffnung 11. Die Düsenvorrichtung 1 weist außerdem eine Temperiervorrichtung 20 auf, die eine Kühlvorrichtung 21 zum Kühlen der Materialschmelze 200 und eine Heizvorrichtung 22 zum Heizen der Materialschmelze 200 aufweist. Die Kühlvorrichtung 21 ist gemäß Fig. 2 in einer Strömungsrichtung der Materialschmelze 200, die durch Pfeile dargestellt ist, stromaufwärts der Heizvorrichtung 22 angeordnet.

Die Kühlvorrichtung 21 ist gemäß Fig. 2 an einem inneren und einem äußeren Kühlabschnitt 15 des Grundkörpers 10 angeordnet. Die Heizvorrichtung 22 ist gemäß Fig. 2 an einem inneren und einem äußeren Heizabschnitt 16 des Grundkörpers 10 angeordnet. Für eine Wärmetrennung zwischen dem durch die Kühlvorrichtung 21 kühlbaren Kühlabschnitt 15 des Grundkörpers 10 und dem durch die Heizvorrichtung 22 heizbaren Heizabschnitt 16 des Grundkörpers 10 weist die Düsenvorrichtung 1 einen zweiten Wärmetrennabschnitt 12 auf, der zwischen dem Kühlabschnitt 15 und dem Heizabschnitt 16 ausgestaltet ist.

Der zweite Wärmetrennabschnitt 12 ist als Ringspalt zwischen dem Kühlabschnitt 15 und dem Heizabschnitt 16 bzw. im Querschnitt des Grundkörpers 10 als zwei Nuten bzw. Einstiche zwischen dem Kühlabschnitt 15 und dem Heizabschnitt 16 ausgestaltet.

Wie ferner in Fig. 2 dargestellt, weist der Schmelzkanal 17 in einem Bereich am Kühlabschnitt 15 eine Verjüngung und in einem Bereich am Heizabschnitt 16 eine Verbreiterung hin zur Austrittsöffnung 11 auf. Die Verbreiterung ist für eine bessere Sichtbarkeit in den Figuren relativ deutlich dargestellt, kann in Realität aber auch deutlich geringer ausfallen. Die Heizvorrichtung 22 und die Kühlvorrichtung 21 sind an einem Düsenlippenabschnitt des Grundkörpers 10 bzw. der Düsenvorrichtung 1 angeordnet. Eine Schmelzkanalfläche 18 des Kühlabschnitts 15 weist einen Reibungskoeffizienten von 0,5 auf.

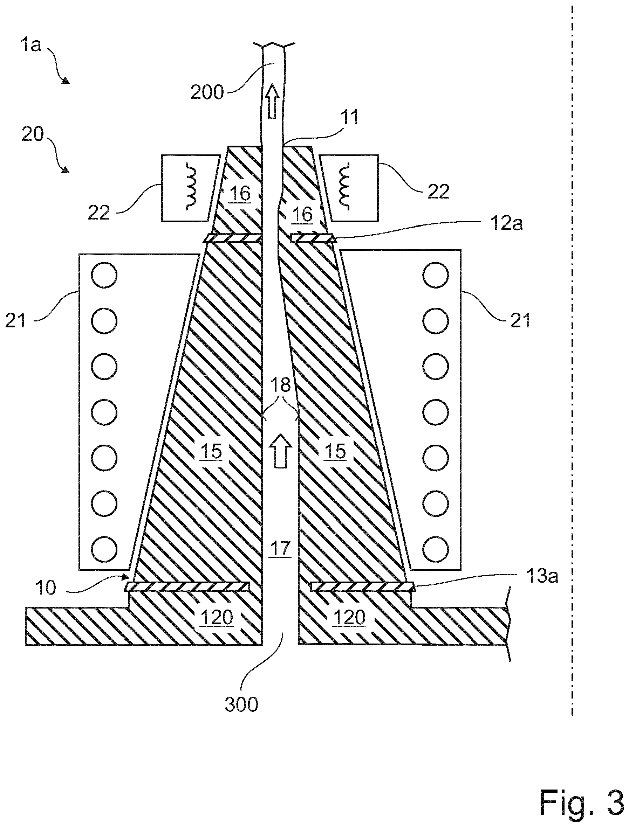

Fig. 3 zeigt schematisch eine Düsenvorrichtung 1a gemäß einer zweiten Ausführungsform. Die zweite Ausführungsform entspricht im Wesentlichen der ersten Ausführungsform. Um auf eine unnötige Wiederholung der Beschreibung zu verzichten, werden anschließend nur die Unterscheidungsmerkmale zwischen den beiden Ausführungsformen erläutert. So weist bei der in Fig. 3 dargestellten Düsenvorrichtung 1a der zweite Wärmetrennabschnitt 12 einen wärmeisolierenden Festkörper 12a auf, der zwischen dem Kühlabschnitt 15 und dem Heizabschnitt 16 angeordnet ist. Außerdem weist der erste Wärmetrennabschnitt 13 einen wärmeisolierenden Festkörper 13a auf, der zwischen dem Kühlabschnitt 15 und dem Grundabschnitt 120 angeordnet ist.

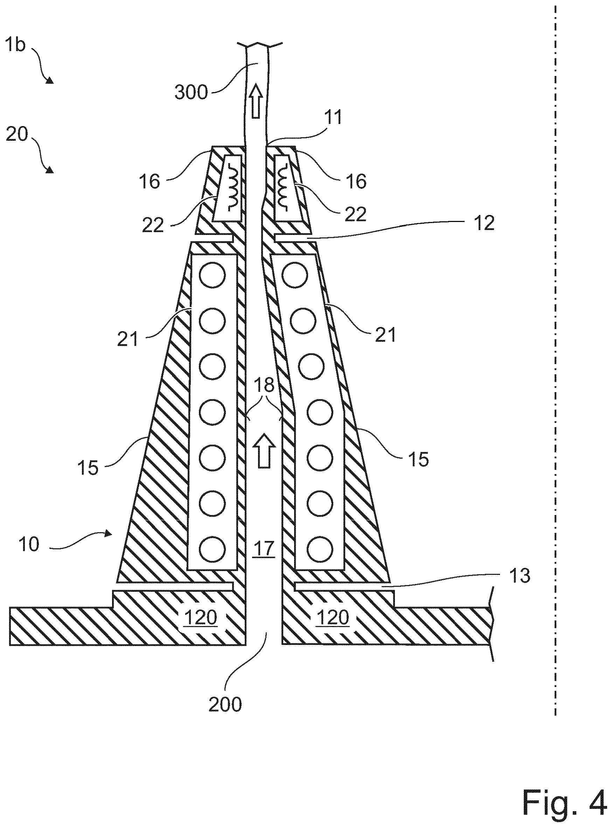

Fig. 4 zeigt schematisch eine Düsenvorrichtung 1b gemäß einer dritten Ausführungsform. Die dritte Ausführungsform entspricht im Wesentlichen der ersten und der zweiten Ausführungsform. Um auf eine unnötige Wiederholung der Beschreibung zu verzichten, werden anschließend nur die Unterscheidungsmerkmale zwischen den Ausführungsformen erläutert. So ist die Kühlvorrichtung 21 gemäß der dritten Ausführungsform innerhalb des Kühlabschnitts 15 angeordnet und die Heizvorrichtung 22 ist innerhalb des Heizabschnitts 16 angeordnet.

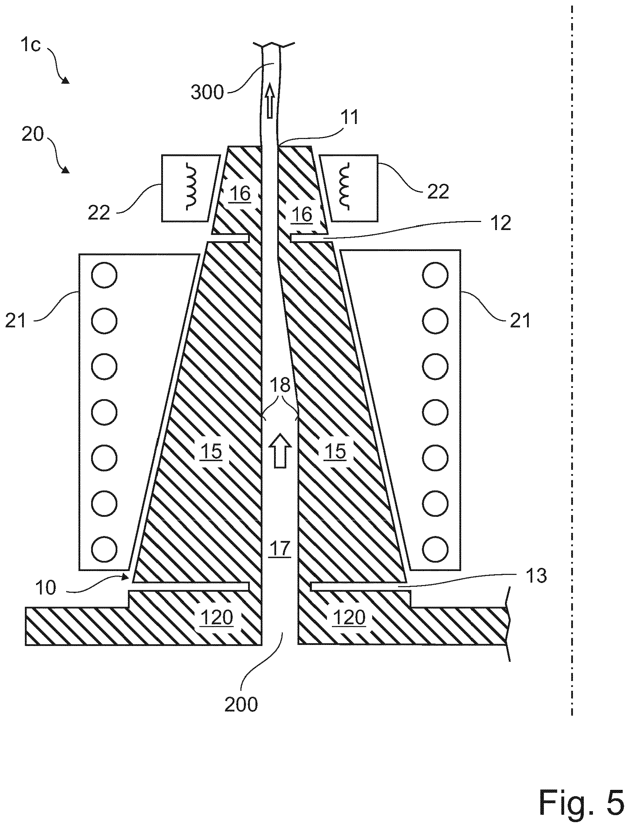

Fig. 5 zeigt schematisch eine Düsenvorrichtung 1c gemäß einer vierten Ausführungsform. Die vierte Ausführungsform entspricht im Wesentlichen der ersten Ausführungsform und unterscheidet sich lediglich dadurch von dieser, dass die Austrittsöffnung 11 gerade ausgestaltet ist, d.h., keine Verbreiterung aufweist.

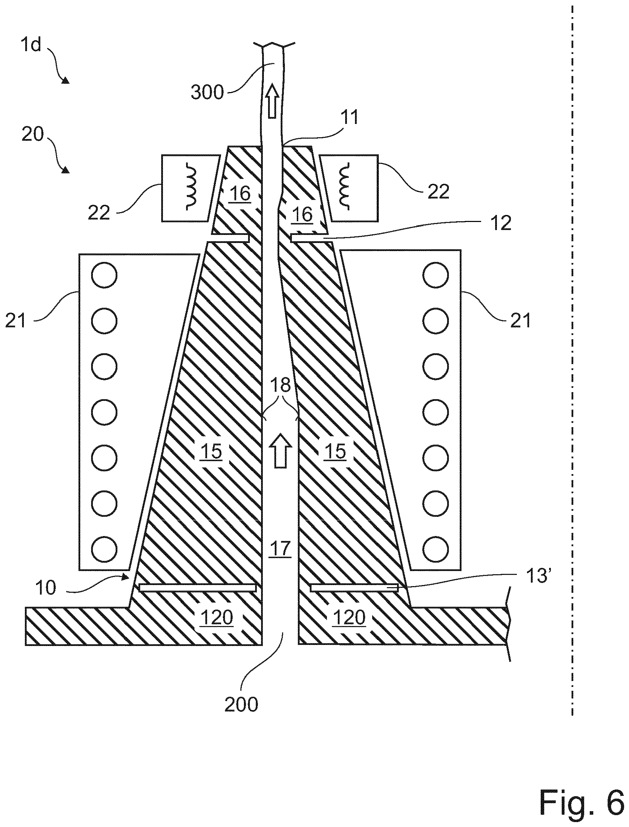

Fig. 6 zeigt schematisch eine Düsenvorrichtung 1d gemäß einer fünften Ausführungsform. Die fünfte Ausführungsform entspricht im Wesentlichen der ersten Ausführungsform und unterscheidet sich lediglich dadurch von dieser, dass ein erster Wärmetrennabschnitt 13' nicht durch Einstiche, sondern als Ringnut bzw. ringförmige Aussparungen, d.h., eine innere ringförmige Aussparung (rechts in Fig. 6) und eine äußere ringförmige Aussparung (links in Fig. 6), zwischen dem Kühlabschnitt 15 und dem Grundabschnitt 120 ausgestaltet ist.

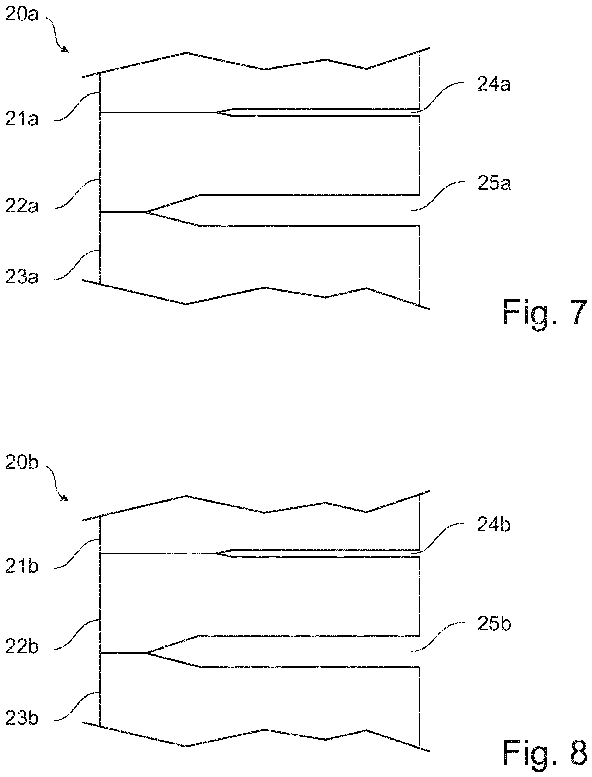

In Fig. 7 ist eine Temperiervorrichtung 20a zum Temperieren einer Materialschmelze 200 in einem Blaskopf 100 und/oder in einer Düsenvorrichtung 1 dargestellt. Die in Fig. 7 dargestellte Temperiervorrichtung 20a weist drei Temperiermodule 21a, 22a, 23a auf, wobei zwei Temperiermodule 21a, 23a jeweils als ein Kühlmodul betrieben werden und ein weiteres Temperiermodul 22a als ein Heizmodul betrieben wird. Das Heizmodul befindet sich dabei zwischen den beiden Kühlmodulen. Die Temperiermodule 21a, 22a, 23a sind jedoch auch umschaltbar, sodass das Heizmodul auch als ein Kühlmodul betreibbar ist und das Kühlmodul auch als ein Heizmodul betreibbar ist. Für eine Wärmetrennung zwischen den Temperiermodulen 21a, 22a, 23a sind zwischen diesen unterschiedlich ausgestaltete Wärmetrennabschnitte 24a, 25a ausgebildet.

Fig. 8 zeigt eine Temperiervorrichtung 20b die im Wesentlichen der Temperiervorrichtung 20a von Fig. 7 entspricht. Die Temperiervorrichtung 20b von Fig. 8 unterscheidet sich lediglich durch die Anordnung der Temperiermodule 21b, 22c, 23c von der Temperiervorrichtung 20a aus Fig. 7. Gemäß Fig. 8 sind die beiden als Kühlmodule betriebenen Temperiermodule 22b, 23b nebeneinander angeordnet und das als Heizmodul ausgestaltete Temperiermodul 21b ist neben einem der Kühlmodule angeordnet. Auch bei dieser Ausführungsform sind für eine Wärmetrennung zwischen den Temperiermodulen 21b, 22b, 23b zwischen diesen unterschiedlich ausgestalteten Wärmetrennabschnitten 24b, 25b ausgebildet. Darüber hinaus sind auch hier die Temperiermodule 21b, 22b, 23b umschaltbar, sodass das Heizmodul auch als ein Kühlmodul betreibbar ist und das Kühlmodul auch als ein Heizmodul betreibbar ist.

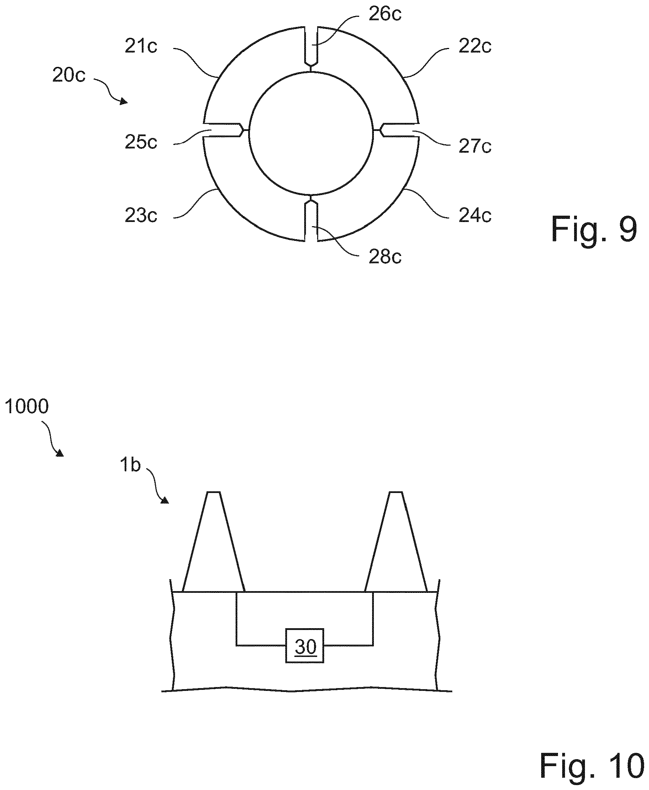

In Fig. 9 ist eine ringförmige Temperiervorrichtung 20c dargestellt. In dieser Temperiervorrichtung 20c sind vier Temperiermodule 21c, 22c, 23c, 24c radial bzw. in Umfangsrichtung der ringförmigen Temperiervorrichtung 20c nebeneinander angeordnet. Für eine Wärmetrennung zwischen den Temperiermodulen 21c, 22c, 23c, 24c sind vier Wärmetrennabschnitte 25c, 26c, 27c, 28c radial bzw. in Umfangsrichtung der ringförmigen Temperiervorrichtung 20c zwischen den Temperiermodulen 21c, 22c, 23c, 24 ausgestaltet.

Fig. 10 zeigt schematisch einen Abschnitt einer Blasextrusionsvorrichtung 1000 mit einer wie vorstehend dargestellten Düsenvorrichtung 1b in Form einer Ringdüse. Wie in Fig. 4 gezeigt, weist die Düsenvorrichtung 1b bzw. die Blasextrusionsvorrichtung 1000 einen Controller 30 auf. Der Controller ist zum Ansteuern der Temperiervorrichtung 20 bzw. der Kühlvorrichtung 21 und der Heizvorrichtung 22 ausgestaltet.

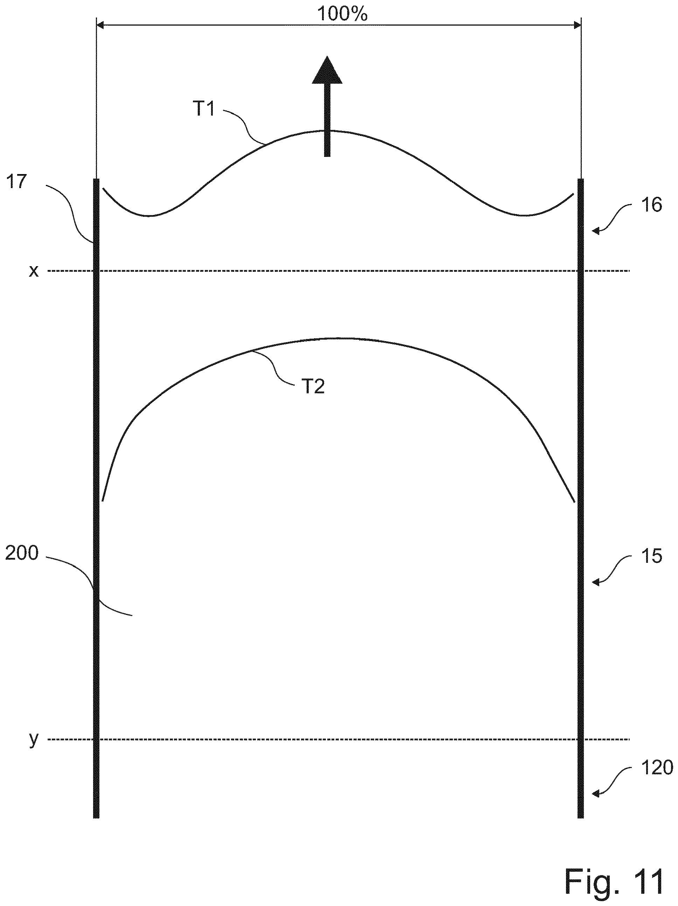

Mit Bezug auf Fig. 1 sowie Fig. 11 wird anschließend ein Verfahren zur Herstellung einer Blasfolie 300 aus einer Materialschmelze 200 mit einem wie vorstehend beschriebenen Blaskopf 100 erläutert. Hierzu wird zunächst eine Materialschmelze 200 mit einer Temperatur von ca. 200°C durch den Schmelzkanal 17 in Richtung der Austrittsöffnung 11 geleitet, nachdem die Materialschmelze im Basiskörper 121 entsprechend erhitzt wurde. Hierbei wird der Kühlabschnitt 15 durch die Kühlvorrichtung 21 bei der Herstellung der Blasfolie 300 in einem Bereich am Schmelzkanal 17 auf ca. 120°C temperiert. Dadurch wird ein äußerer Abschnitt der Materialschmelze 200 beim Passieren des Kühlabschnitts 15 auf ca. 180°C abgekühlt. Dadurch kann eine besonders hohe Ausstoßleistung erzielt werden. Gleichzeitig wird der Heizabschnitt 16 durch die Heizvorrichtung 22 in einem Bereich am Schmelzkanal 17 auf beispielsweise 195°C erhitzt. Durch die gezielte, lokal beschränkte Erwärmung der Materialschmelze 200 wird ein äußerer Abschnitt der Materialschmelze 200 im Heizabschnitt 16 auf ca. 183°C erwärmt. Dadurch kann beim Ausgeben der Blasfolie 300 ein unerwünschter Schmelzbrucheffekt verhindert werden.

Fig. 11 zeigt dabei ein Diagramm zur Verdeutlichung der Temperierung einer Materialschmelze während des vorliegenden Verfahrens. In Fig. 11 ist ein Schmelzkanal 17 mit einer darin befindlichen Materialschmelze 200 dargestellt, die in Pfeilrichtung zur Austrittsöffnung 11 strömt, wobei ein Bereich unter der Trennlinie y den Grundabschnitt 120 kennzeichnet, ein Bereich zwischen den Trennlinien x und y den Kühlabschnitt 15 kennzeichnet und ein Bereich über der Trennlinie x den Heizabschnitt 16 kennzeichnet. Außerdem sind in Fig. 11 zwei Temperaturkennlinien T1, T2 dargestellt, die einen Temperaturverlauf der Materialschmelze 200, deren Dicke von links nach rechts mit 100% gekennzeichnet ist, bei einer Temperierung derselben darstellen. Im oberen Scheitelpunkt der ersten Temperaturkennlinie T1 weist die Materialschmelze 200 die höchste Temperatur auf, vorliegend ca. 200°C. In den unteren Scheitelpunkten der ersten Temperaturkennlinie T1 weist die Materialschmelze 200 ihre niedrigste Temperatur auf, vorliegend ca. 180°C. Im äußersten Bereich weist die Materialschmelze 200 gemäß der ersten Temperaturkennlinie T1 eine Temperatur von ca. 183°C auf. Die mittlere Temperatur der Materialschmelze 200 beträgt dort in etwa 185°C. Bezüglich der zweiten Temperaturkennlinie T2 weist die Materialschmelze 200 ebenfalls in der Mitte, also im oberen Scheitelpunkt der zweiten Temperaturkennlinie T2 die höchste Temperatur auf, vorliegend ca. 200°C. Im äußersten Bereich weist die Materialschmelze 200 eine Temperatur von ca. 180°C auf. Die mittlere Temperatur der Materialschmelze 200 gemäß der zweiten Temperaturkennlinie T2 beträgt in etwa 183°C.

### Bezugszeichenliste

- 1; 1a; 1b; 1c; 1d: Düsenvorrichtung
- 10: Grundkörper
- 11: Austrittsöffnung
- 12: zweiter Wärmetrennabschnitt
- 12a: wärmeisolierender Festkörper
- 13, 13': erster Wärmetrennabschnitt
- 13a: wärmeisolierender Festkörper
- 14: Temperierabschnitt
- 15: Kühlabschnitt
- 16: Heizabschnitt
- 17: Schmelzkanal
- 18: Schmelzkanalfläche
- 20: Temperiervorrichtung
- 21: Kühlvorrichtung
- 22: Heizvorrichtung
- 30: Controller
- 100: Blaskopf
- 100: Blaskopf
- 110: Kopfabschnitt
- 120: Grundabschnitt
- 121: Basiskörper
- 122: Schwenkkörper
- 200: Materialschmelze
- 300: Blasfolie
- 1000: Blasextrusionsvorrichtung
- T1: erste Temperaturkennlinie
- T2: zweite Temperaturkennlinie

### Bezugszeichenliste

- 1; 1a; 1b; 1c; 1d: Düsenvorrichtung
- 10: Grundkörper
- 11: Austrittsöffnung
- 12: zweiter Wärmetrennabschnitt
- 12a: wärmeisolierender Festkörper
- 13, 13': erster Wärmetrennabschnitt
- 13a: wärmeisolierender Festkörper
- 14: Temperierabschnitt
- 15: Kühlabschnitt
- 16: Heizabschnitt
- 17: Schmelzkanal
- 18: Schmelzkanalfläche
- 20: Temperiervorrichtung
- 21: Kühlvorrichtung
- 22: Heizvorrichtung
- 30: Controller
- 100: Blaskopf
- 100: Blaskopf
- 110: Kopfabschnitt
- 120: Grundabschnitt
- 121: Basiskörper
- 122: Schwenkkörper
- 200: Materialschmelze
- 300: Blasfolie
- 1000: Blasextrusionsvorrichtung
- T1: erste Temperaturkennlinie
- T2: zweite Temperaturkennlinie

## Patentansprüche

1. Blaskopf (100) für eine Blasextrusionsvorrichtung (1000) zur Herstellung einer Blasfolie (300) aus einer Materialschmelze (200), aufweisend eine Düsenvorrichtung (1; 1a; 1b; 1c; 1d) in einem Kopfabschnitt (110) des Blaskopfes (100) mit einer Austrittsöffnung (11) zum Auslassen der Materialschmelze (200) als Blasfolie (300), wobei die Düsenvorrichtung (1; 1a; 1b; 1c; 1d) einen Schmelzkanal (17) zum Fördern der Materialschmelze (200) zur Austrittsöffnung (11) und eine Temperiervorrichtung (20) aufweist, wobei die Temperiervorrichtung (20), zum Temperieren der Materialschmelze (200) in der Düsenvorrichtung (1; 1a; 1b; 1c; 1d), ausgestaltet und angeordnet ist,
**dadurch gekennzeichnet,**
**dass** für eine Wärmetrennung zwischen einem durch die Temperiervorrichtung (20) temperierbaren Temperierabschnitt (14) der Düsenvorrichtung (1; 1a; 1b; 1c; 1d) und einem Grundabschnitt (120) des Blaskopfes (100), der in einer Strömungsrichtung der Materialschmelze (200) stromaufwärts des Temperierabschnitts (14) angeordnet ist, wenigstens ein erster Wärmetrennabschnitt (13) zumindest teilweise zwischen dem Temperierabschnitt (14) und dem Grundabschnitt (120) ausgestaltet ist, wobei die Temperiervorrichtung (20) eine Kühlvorrichtung (21) zum Kühlen der Materialschmelze (200) und eine Heizvorrichtung (22) zum Heizen der Materialschmelze (200) aufweist und die Kühlvorrichtung (21) in einer Strömungsrichtung der Materialschmelze (300) stromaufwärts der Heizvorrichtung (22) angeordnet ist.

2. Blaskopf (100) nach Anspruch 1,
**dadurch gekennzeichnet,**
**dass** die Kühlvorrichtung (21) und/oder die Heizvorrichtung (22) ringförmig ausgestaltet und in einer Umfangsrichtung segmentiert und einzeln ansteuerbar ausgestaltet ist.

3. Blaskopf (100) nach Anspruch 1 oder 2,
**dadurch gekennzeichnet,**
**dass** die Düsenvorrichtung (1; 1a; 1b; 1c; 1d) einen Grundkörper (10) mit der Austrittsöffnung (11) zum Auslassen der Materialschmelze (200) aufweist, wobei der Grundkörper (10) den Schmelzkanal (17) zum Fördern der Materialschmelze (200) zur Austrittsöffnung (11) bildet, wobei für eine Wärmetrennung zwischen einem durch die Kühlvorrichtung (21) kühlbaren Kühlabschnitt (15) des Grundkörpers (10) und einem durch die Heizvorrichtung (22) heizbaren Heizabschnitt (16) des Grundkörpers (10) wenigstens ein zweiter Wärmetrennabschnitt (12) zumindest teilweise zwischen dem Kühlabschnitt (15) und dem Heizabschnitt (16) ausgestaltet ist.

4. Blaskopf (100) nach Anspruch 3,
**dadurch gekennzeichnet,**
**dass** der wenigstens eine zweite Wärmetrennabschnitt (12) als ein Ringspalt zwischen dem Kühlabschnitt (15) und dem Heizabschnitt (16) oder zumindest im Querschnitt des Grundkörpers (10) als wenigstens eine Nut zwischen dem Kühlabschnitt (15) und dem Heizabschnitt (16) ausgestaltet ist und/oder
**dass** der wenigstens eine zweite Wärmetrennabschnitt (12) einen wärmeisolierenden Festkörper (12') aufweist, der zumindest abschnittsweise zwischen dem Kühlabschnitt (15) und dem Heizabschnitt (16) angeordnet ist und/oder
**dass** der wenigstens eine erste Wärmetrennabschnitt (13) als ein Ringspalt zwischen dem Kühlabschnitt (15) und dem Grundabschnitt (120) oder zumindest im Querschnitt eines Abschnitts der Düsenvorrichtung (1; 1b) als wenigstens eine Nut zwischen dem Temperierabschnitt (14) und dem Grundabschnitt (120) ausgestaltet ist.

5. Blaskopf (100) nach einem der Ansprüche 1 bis 4,
**dadurch gekennzeichnet,**
**dass** der wenigstens eine erste Wärmetrennabschnitt (13) einen wärmeisolierenden Festkörper (13') aufweist, der zumindest abschnittsweise zwischen dem Temperierabschnitt (14) und dem Grundabschnitt (120) angeordnet ist und/oder
**dass** der Kühlabschnitt (15) in einem Bereich am Schmelzkanal (17) eine Höhe zwischen 50 mm und 120 mm, insbesondere eine Höhe zwischen 50 mm und 100 mm aufweist und/oder
**dass** der Heizabschnitt (16) in einem Bereich am Schmelzkanal (17) eine Höhe zwischen 10 mm und 30 mm aufweist.

6. Blaskopf (100) nach einem der Ansprüche 1 bis 5,
**dadurch gekennzeichnet,**
**dass** der Heizabschnitt (16) in einer Strömungsrichtung der Materialschmelze (200) eine Höhe aufweist, die weniger als 50%, insbesondere weniger als 30%, der Höhe des Kühlabschnitts (15) in der Strömungsrichtung der Materialschmelze (200) ist und/oder
**dass** der Schmelzkanal (17), insbesondere in einem Bereich am Kühlabschnitt (15), eine Verjüngung und, insbesondere in einem Bereich am Heizabschnitt (16), eine Verbreiterung, insbesondere zur Austrittsöffnung (11) hin, aufweist und/oder
**dass** der Grundkörper (10) oder die Düsenvorrichtung (1; 1a; 1b; 1c; 1d) einen Düsenlippenabschnitt aufweist und die Heizvorrichtung (22) und/oder die Kühlvorrichtung (21) am oder im Düsenlippenabschnitt angeordnet sind.

7. Blaskopf (100) nach einem der Ansprüche 1 bis 6,
**dadurch gekennzeichnet,**
**dass** eine Schmelzkanalfläche (18) des Kühlabschnitts (15) einen Reibungskoeffizienten in einem Bereich von 0,03 bis 0,07 aufweist und/oder
**dass** die Kühlvorrichtung (21) zumindest abschnittsweise im Kühlabschnitt (15) angeordnet ist und/oder die Heizvorrichtung (22) zumindest abschnittsweise im Heizabschnitt (16) angeordnet ist.

8. Blaskopf (100) nach einem der Ansprüche 1 bis 7,
**dadurch gekennzeichnet,**
**dass** ein Controller (30) zum Steuern und/oder Regeln der Düsenvorrichtung (1b) angeordnet ist und die Kühlvorrichtung (21) und die Heizvorrichtung (22) durch den Controller (30) ansteuerbar, insbesondere getrennt voneinander ansteuerbar sind.

9. Blaskopf (100) nach einem der Ansprüche 1 bis 8,
**dadurch gekennzeichnet,**
**dass** der Kühlabschnitt (15) ein Material mit einer Wärmeleitfähigkeit von mehr als 200 W/(m*K) aufweist und/oder
**dass** der Grundkörper (10) einstückig ausgestaltet ist und/oder
**dass** der zweite Wärmetrennabschnitt (12) und/oder der erste Wärmetrennabschnitt (13) jeweils eine Höhe von weniger als 10 mm, insbesondere eine Höhe von weniger als 5 mm aufweisen.

10. Düsenvorrichtung (1; 1a; 1b; 1c; 1d) für einen Blaskopf (100) nach einem der Ansprüche 1 bis 18, aufweisend einen Grundkörper (10) mit einer Austrittsöffnung (11) zum Auslassen der Materialschmelze (200) als Blasfolie (300), wobei der Grundkörper (10) einen Schmelzkanal (17) zum Fördern der Materialschmelze (200) zur Austrittsöffnung (11) bildet, und eine Temperiervorrichtung (20), wobei die Temperiervorrichtung (20) eine Kühlvorrichtung (21) zum Kühlen der Materialschmelze (200) und eine Heizvorrichtung (22) zum Heizen der Materialschmelze (200) aufweist,
**dadurch gekennzeichnet,**
**dass** für eine Wärmetrennung zwischen einem durch die Kühlvorrichtung (21) kühlbaren Kühlabschnitt (15) des Grundkörpers (10) und einem durch die Heizvorrichtung (22) heizbaren Heizabschnitt (16) des Grundkörpers (10) wenigstens ein zweiter Wärmetrennabschnitt (12) zumindest teilweise zwischen dem Kühlabschnitt (15) und dem Heizabschnitt (16) ausgestaltet ist, und die Kühlvorrichtung (21) in einer Strömungsrichtung der Materialschmelze (300) stromaufwärts der Heizvorrichtung (22) angeordnet ist.

11. Grundkörper (10) zur Verwendung in einem Blaskopf (100) nach einem der Ansprüche 1-9 und/oder einer Düsenvorrichtung (1; 1a; 1b; 1c; 1d) nach Anspruch 10, wobei der Grundkörper (10) eine Austrittsöffnung (11) zum Auslassen einer Materialschmelze (200) als Blasfolie (300) aufweist und einen Schmelzkanal (17) zum Fördern der Materialschmelze (200) zur Austrittsöffnung (11) bildet,
**dadurch gekennzeichnet,**
**dass** für eine Wärmetrennung zwischen einem kühlbaren Kühlabschnitt (15) des Grundkörpers (10) und einem heizbaren Heizabschnitt (16) des Grundkörpers (10) wenigstens ein zweiter Wärmetrennabschnitt (12) zumindest teilweise zwischen dem Kühlabschnitt (15) und dem Heizabschnitt (16) ausgestaltet ist, und die Kühlvorrichtung (21) in einer Strömungsrichtung der Materialschmelze (300) stromaufwärts der Heizvorrichtung (22) angeordnet ist.

12. Grundkörper (10) nach Anspruch 11,
**dadurch gekennzeichnet,**
**dass** der wenigstens eine erste Wärmetrennabschnitt (12) als ein Ringspalt zwischen dem Kühlabschnitt (15) und dem Heizabschnitt (16) oder zumindest im Querschnitt des Grundkörpers (10) als wenigstens eine Nut zwischen dem Kühlabschnitt (15) und dem Heizabschnitt (16) ausgestaltet ist.

13. Temperiervorrichtung (20a; 20b; 20c) zum Temperieren einer Materialschmelze (200) in einem Blaskopf (100) nach einem der Ansprüche 1 bis 9 und/oder in einer Düsenvorrichtung (1; 1a; 1b; 1c; 1d) nach Anspruch 10,
**dadurch gekennzeichnet,**
**dass** die Temperiervorrichtung (20a; 20b; 20c) wenigstens zwei Temperiermodule (21a, 22a, 23a; 21b, 22b, 23b; 21c, 22c, 23c, 24c) aufweist, wobei wenigstens ein erstes Temperiermodul (21a, 23a; 22b, 23b; 21c, 23c) als Kühlmodul betreibbar ist und wenigstens ein zweites Temperiermodul (22a; 21b; 22c, 24c) als Heizmodul betreibbar ist, und wobei für eine Wärmetrennung zwischen dem wenigstens einen ersten Temperiermodul (21a, 23a; 22b, 23b; 21c, 23c) und dem wenigstens einen zweiten Temperiermodul (22a; 21b; 23c, 24c) wenigstens ein Wärmetrennabschnitt (24a, 25a; 24b, 25b; 25c, 26c, 27c, 28c) zumindest teilweise zwischen dem wenigstens einen ersten Temperiermodul (21a, 23a; 22b, 23b; 21c, 23c) und dem wenigstens einen zweiten Temperiermodul (22a; 21b; 22c, 24c) ausgestaltet ist, und die Kühlvorrichtung (21a, 23a; 22b, 23b; 21c, 23c) in einer Strömungsrichtung der Materialschmelze (300) stromaufwärts der Heizvorrichtung (22a; 21b; 22c, 24c) angeordnet ist.

14. Temperiervorrichtung (20c) nach Anspruch 13,
**dadurch gekennzeichnet,**
**dass** die Temperiervorrichtung (20c) ringförmig ausgestaltet ist und/oder dass das wenigstens eine erste Temperiermodul (21c, 23c) und das wenigstens eine zweite Temperiermodul (23c, 24c) zumindest abschnittsweise radial nebeneinander angeordnet sind und die Wärmetrennung zwischen dem wenigstens einen ersten Temperiermodul (21c, 23c) und dem wenigstens einen zweiten Temperiermodul (23c, 24c) durch den wenigstens einen Wärmetrennabschnitt (25c, 26c, 27c, 28c) zumindest teilweise radial zwischen dem wenigstens einen ersten Temperiermodul (21c, 23c) und dem wenigstens einen zweiten Temperiermodul (22c, 24c) ausgestaltet ist.

15. Verfahren zur Herstellung einer Blasfolie (300) aus einer Materialschmelze (200) mit einem Blaskopf (100) nach einem der Ansprüche 1 bis 9 und/oder einer Düsenvorrichtung (1; 1a; 1b; 1c; 1d) nach Anspruch 10.

16. Verfahren nach Anspruch 15,
**dadurch gekennzeichnet,**
**dass** der Temperierabschnitt (14), insbesondere der Kühlabschnitt (15) im Temperierabschnitt (14), durch die Temperiervorrichtung (20) bzw. die Kühlvorrichtung (21) bei der Herstellung der Blasfolie (300) zumindest abschnittsweise, insbesondere in einem Bereich am Schmelzkanal (17), derart temperiert wird, dass die Materialschmelze um mehr als 10% abgekühlt wird.

17. Verfahren zur Herstellung einer Blasfolie (300) aus einer Materialschmelze (200) mit einem Blaskopf (100) nach einem der Ansprüche 1 bis 9 und/oder einer Düsenvorrichtung (1; 1a; 1b; 1c; 1d) nach Anspruch 10,
**dadurch gekennzeichnet,**
**dass** der Kühlabschnitt (15) durch die Kühlvorrichtung (21) bei der Herstellung der Blasfolie (300) zumindest abschnittsweise, insbesondere in einem Bereich am Schmelzkanal (17), auf eine Temperatur unter 80°C, insbesondere auf eine Temperatur unter 50°C temperiert wird.

18. Verfahren (1) nach einem der Ansprüche 15 bis 17,
**dadurch gekennzeichnet,**
**dass** der Heizabschnitt (16) durch die Heizvorrichtung (22) bei der Herstellung der Blasfolie (300) zumindest abschnittsweise, insbesondere in einem Bereich am Schmelzkanal (17), auf eine Temperatur temperiert wird, die höher, insbesondere um 1°C bis 3°C höher, als die Temperatur der Materialschmelze (200) am Heizabschnitt (16) ist und/oder
**dass** eine Eindringtiefe der Temperaturerhöhung in einem Bereich des Heizabschnitts (16) um mehr als 50%, bevorzugt um mehr als 75%, besonders bevorzugt um mehr als 85% kürzer als ein Querschnitt der Materialschmelze (200) in diesem Bereich des Heizabschnitts (16) ist.

19. Verfahren (1) nach einem der Ansprüche 15 bis 18,
**dadurch gekennzeichnet,**
**dass** der Temperierabschnitt (20) derart ausgestaltet und temperiert wird, dass die Materialschmelze (200) bei der Herstellung der Blasfolie (300) mit wenigstens zwei unterschiedlichen Fließgeschwindigkeiten durch den Temperierabschnitt (20) strömt und/oder
**dass** der Kühlabschnitt (15) und der Heizabschnitt (16) derart ausgestaltet und temperiert werden, dass die Materialschmelze (200) bei der Herstellung der Blasfolie (300) durch den Heizabschnitt (16) mit einer höheren Fließgeschwindigkeit als durch den Kühlabschnitt (15) strömt, wobei die Fließgeschwindigkeit der Materialschmelze (200) durch den Heizabschnitt (16) bevorzugt 1,5-fach bis 15-fach, besonders bevorzugt 2-fach bis 10-fach höher als die Fließgeschwindigkeit der Materialschmelze (200) durch den Kühlabschnitt (15) ist.

20. Verfahren zur Herstellung einer Blasfolie (300) aus einer Materialschmelze (200) mit einem Blaskopf (100), wobei der Blaskopf (100) in einem Kopfabschnitt (110) des Blaskopfes (100) eine Düsenvorrichtung (1; 1a; 1b; 1c; 1d) mit einer Austrittsöffnung (11) zum Auslassen der Materialschmelze (200) als Blasfolie (300) aufweist, wobei die Düsenvorrichtung (1; 1a; 1b; 1c; 1d) einen Schmelzkanal (17) zum Fördern der Materialschmelze (200) zur Austrittsöffnung (11) und eine Temperiervorrichtung (20) aufweist und die Temperiervorrichtung (20) eine Kühlvorrichtung (21) zum Kühlen der Materialschmelze (200) und eine Heizvorrichtung (22) zum Heizen der Materialschmelze (200) aufweist, wobei die Düsenvorrichtung (1; 1a; 1b; 1c; 1d) einen durch die Kühlvorrichtung (21) kühlbaren Kühlabschnitt (15) und einen durch die Heizvorrichtung (22) heizbaren Heizabschnitt (16) aufweist,
**dadurch gekennzeichnet,**
**dass** der Kühlabschnitt (15) durch die Kühlvorrichtung (21) bei der Herstellung der Blasfolie (300) zumindest abschnittsweise, insbesondere in einem Bereich am Schmelzkanal (17), auf eine Temperatur unter 80°C, insbesondere auf eine Temperatur unter 50°C temperiert wird, und die Kühlvorrichtung (21) in einer Strömungsrichtung der Materialschmelze (300) stromaufwärts der Heizvorrichtung (22) angeordnet ist.

21. Blasextrusionsvorrichtung (1000) mit einem Blaskopf (100) nach einem der Ansprüche 1 bis 9, einer Düsenvorrichtung (1b) nach Anspruch 10, einem Grundkörper (10) nach einem der Ansprüche 11 bis 12, einer Temperiervorrichtung (20) nach einem der Ansprüche 19 bis 14 und/oder zum Durchführen eines Verfahrens nach einem der Ansprüche 15 bis 20.

## Claims

1. A blow head (100) for a blow extrusion device (1000) for producing a blown film (300) from a material melt (200), having a nozzle device (1; 1a; 1b; 1c; 1d) in a head section (110) of the blow head (100), the nozzle device having an outlet opening (11) for discharging the material melt (200) as blown film (300), wherein said nozzle device (1; 1a; 1b; 1c; 1d) has a melt channel (17) for conveying the material melt (200) to the outlet opening (11) and has a temperature-control device (20), wherein the temperature-control device (20) is designed and arranged to control the temperature of the material melt (200) in the nozzle device (1; 1a; 1b; 1c; 1d),
**characterized in**
**that** for thermal separation between a temperature-control section (14) of the nozzle device (1; 1a; 1b; 1c; 1d) that can be temperature-controlled by the temperature-control device (20) and a base section (120) of the blow head (100), which base section is arranged upstream of the temperature-control section (14) in a flow direction of the material melt (200), at least one first thermal separation section (13) is formed at least partially between the temperature-control section (14) and the base section (120), wherein the temperature-control device (20) has a cooling device (21) for cooling the material melt (200) and a heating device (22) for heating the material melt (200) and the cooling device (21) is arranged upstream of the heating device (22) in a flow direction of the material melt (300).

2. The blow head (100) according to claim 1,
**characterized in**
**that** the cooling device (21) and/or the heating device (22) is of annular design and is designed to be segmented and individually controllable in a circumferential direction.

3. The blow head (100) according to claim 1 or 2,
**characterized in**
**that** the nozzle device (1; 1a; 1b; 1c; 1d) has a base body (10) with the outlet opening (11) for discharging the material melt (200), wherein the base body (10) forms the melt channel (17) for conveying the material melt (200) to the outlet opening (11), wherein for a thermal separation between a cooling section (15) of the base body (10) that can be cooled by the cooling device (21) and a heating section (16) of the base body (10) that can be heated by the heating device (22), at least one second thermal separation section (12) is at least partially formed between the cooling section (15) and the heating section (16).

4. The blow head (100) according to claim 3,
**characterized in**
**that** the at least one second thermal separation section (12) is designed as an annular gap between the cooling section (15) and the heating section (16) or at least in the cross section of the base body (10) as at least one groove between the cooling section (15) and the heating section (16) and/or
**that** the at least one second thermal separation section (12) has a heat-insulating solid body (12'), which is arranged at least in sections between the cooling section (15) and the heating section (16) and/or
**that** the at least one first thermal separation section (13) is designed as an annular gap between the cooling section (15) and the base section (120) or at least in the cross section of a section of the nozzle device (1; 1b) as at least one groove between the temperature-control section (14) and the base section (120).

5. The blow head (100) according to any one of claims 1 to 4,
**characterized in**
**that** the at least one first thermal separation section (13) has a heat-insulating solid body (13'), which is arranged at least in sections between the temperature-control section (14) and the base section (120) and/or
**that** the cooling section (15) has a height of between 50 mm and 120 mm, in particular a height of between 50 mm and 100 mm, in a region on the melt channel (17) and/or
**that** the heating section (16) has a height of between 10 mm and 30 mm in a region on the melt channel (17).

6. The blow head (100) according to any one of claims 1 to 5,
**characterized in**
**that** the heating section (16) has a height in a flow direction of the material melt (200) which is less than 50%, in particular less than 30%, of the height of the cooling section (15) in the flow direction of the material melt (200) and/or
**that** the melt channel (17), in particular in a region on the cooling section (15), has a tapering and, in particular in a region on the heating section (16), a widening, in particular towards the outlet opening (11) and/or
**that** the base body (10) or the nozzle device (1; 1a; 1b; 1c; 1d) has a nozzle lip section and the heating device (22) and/or the cooling device (21) are arranged on or in the nozzle lip section.

7. The blow head (100) according to any one of claims 1 to 6,
**characterized in**
**that** a melt channel surface (18) of the cooling section (15) has a coefficient of friction in a range of 0.03 to 0.07 and/or
**that** the cooling device (21) is arranged at least in sections in the cooling section (15) and/or the heating device (22) is arranged at least in sections in the heating section (16).

8. The blow head (100) according to any one of claims 1 to 7,
**characterized in**
**that** a controller (30) is arranged for controlling and/or regulating the nozzle device (1b) and the cooling device (21) and the heating device (22) can be controlled by the controller (30), in particular can be controlled separately from one another.

9. The blow head (100) according to any one of claims 1 to 8,
**characterized in**
**that** the cooling section (15) has a material with a thermal conductivity of more than 200 W/(m * K) and/or
**that** the base body (10) is designed in one piece and/or
**that** the second thermal separation section (12) and/or the first thermal separation section (13) each have a height of less than 10 mm, in particular a height of less than 5 mm.

10. A nozzle device (1; 1a; 1b; 1c; 1d) for a blow head (100) according to any one of claims 1 to 18, having a base body (10) with an outlet opening (11) for discharging the material melt (200) as a blown film (300), wherein the base body (10) forms a melt channel (17) for conveying the material melt (200) to the outlet opening (11), and a temperature-control device (20), wherein the temperature-control device (20) has a cooling device (21) for cooling the material melt (200) and a heating device (22) for heating the material melt (200),
**characterized in**
**that** for a thermal separation between a cooling section (15) of the base body (10) that can be cooled by the cooling device (21) and a heating section (16) of the base body (10) that can be heated by the heating device (22), at least one second thermal separation section (12) is formed at least partially between the cooling section (15) and the heating section (16), and the cooling device (21) is arranged upstream of the heating device (22) in a flow direction of the material melt (300).

11. A base body (10) for use in a blow head (100) according to any one of claims 1-9 and/or a nozzle device (1; 1a; 1b; 1c; 1d) according to claim 10, wherein the base body (10) has an outlet opening (11) for discharging a material melt (200) as blown film (300) and forms a melt channel (17) for conveying the material melt (200) to the outlet opening (11),
**characterized in**
**that** for a thermal separation between a cooling section (15) of the base body (10) that can be cooled and a heating section (16) of the base body (10) that can be heated, at least one second thermal separation section (12) is formed at least partially between the cooling section (15) and the heating section (16) and the cooling device (21) is arranged upstream of the heating device (22) in a flow direction of the material melt (300).

12. The base body (10) according to claim 11,
**characterized in**
**that** the at least one first thermal separation section (12) is designed as an annular gap between the cooling section (15) and the heating section (16) or at least in the cross section of the base body (10) as at least one groove between the cooling section (15) and the heating section (16).

13. A temperature-control device (20a; 20b; 20c) for controlling the temperature of a material melt (200) in a blow head (100) according to any one of claims 1 to 9 and/or in a nozzle device (1; 1a; 1b; 1c; 1d) according to claim 10,
**characterized in**
**that** the temperature-control device (20a; 20b; 20c) has at least two temperature-control modules (21a, 22a, 23a; 21b, 22b, 23b; 21c, 22c, 23c, 24c), wherein at least one first temperature-control module (21a, 23a; 22b, 23b; 21c, 23c) can be operated as a cooling module and at least one second temperature-control module (22a; 21b; 22c, 24c) can be operated as a heating module, and wherein for a thermal separation between the at least one first temperature-control module (21a, 23a; 22b, 23b; 21c, 23c) and the at least one second temperature-control module (22a; 21b; 23c, 24c) at least one thermal separation section (24a, 25a; 24b, 25b; 25c, 26c, 27c, 28c) is formed at least partially between the at least one first temperature-control module (21a, 23a; 22b, 23b; 21c, 23c) and the at least one second temperature-control module (22a; 21b; 22c, 24c), and the cooling device (21a, 23a; 22b, 23b; 21c, 23c) is arranged upstream of the heating device (22a; 21b; 22c, 24c) in a flow direction of the material melt (300).

14. The temperature control device (20c) according to claim 13,
**characterized in**
**that** the temperature-control device (20c) is of annular design, and/or
**that** the at least one first temperature-control module (21c, 23c) and the at least one second temperature-control module (23c, 24c) are arranged radially next to one another at least in sections, and the thermal separation between the at least one first temperature-control module (21c, 23c) and the at least one second temperature-control module (23c, 24c) is formed by the at least one thermal separation section (25c, 26c, 27c, 28c) at least partially radially between the at least one first temperature-control module (21c, 23c) and the at least one second temperature-control module (22c, 24c).

15. A method for producing a blown film (300) from a material melt (200) with a blow head (100) according to any one of claims 1 to 9 and/or a nozzle device (1; 1a; 1b; 1c; 1d) according to claim 10.

16. The method according to claim 15,
**characterized in**
**that** the temperature-control section (14), in particular the cooling section (15) in the temperature-control section (14), is temperature-controlled by the temperature-control device (20) or the cooling device (21) during the production of the blown film (300) at least in sections, in particular in a region on the melt channel (17), in such a way that the material melt is cooled by more than 10%.

17. The method for producing a blown film (300) from a material melt (200) with a blow head (100) according to any one of claims 1 to 9 and/or a nozzle device (1; 1a; 1b; 1c; 1d) according to claim 10,
**characterized in**
**that** the cooling section (15) is temperature-controlled to a temperature below 80°C, in particular to a temperature below 50°C, by the cooling device (21) during the production of the blown film (300) at least in sections, in particular in a region on the melt channel (17).

18. The method (1) according to any one of claims 15 to 17,
**characterized in**
**that** the heating section (16) is temperature-controlled at least in sections by the heating device (22) during the production of the blown film (300), in particular in a region on the melt channel (17), to a temperature which is higher, in particular higher by 1°C to 3°C, than the temperature of the material melt (200) on the heating section (16) and/or
**that** a penetration depth of the temperature increase in a region of the heating section (16) is more than 50%, preferably more than 75%, particularly preferably more than 85% shorter than a cross section of the material melt (200) in this region of the heating section (16).

19. The method (1) according to one of Claims 15 to 18,
**characterized in**
**that** the temperature-control section (20) is designed and temperature-controlled in such a way that the material melt (200) flows through the temperature-control section (20) with at least two different flow rates during the production of the blown film (300), and/or
**that** the cooling section (15) and the heating section (16) are designed and temperature-controlled in such away that the material melt (200) flows through the heating section (16) at a higher flow rate than through the cooling section (15) during the production of the blown film (300), wherein the flow rate of the material melt (200) through the heating section (16) is preferably 1.5 times to 15 times, particularly preferably 2 times to 10 times higher than the flow rate of the material melt (200) through the cooling section (15).

20. The method for producing a blown film (300) from a material melt (200) with a blow head (100), wherein in a head section (110) of the blow head (100), the blow head (100) has a nozzle device (1; 1a; 1b; 1c; 1d) having an outlet opening (11) for discharging the material melt (200) as a blown film (300), wherein the nozzle device (1; 1a; 1b; 1c; 1d) has a melt channel (17) for conveying the material melt (200) to the outlet opening (11) and a temperature-control device (20), and the temperature-control device (20) has a cooling device (21) for cooling the material melt (200) and a heating device (22) for heating the material melt (200), wherein the nozzle device (1; 1a; 1b; 1c; 1d) has a cooling section (15) that can be cooled by the cooling device (21) and a heating section (16) that can be heated by the heating device (22),
**characterized in**
**that** the cooling section (15) is temperature-controlled to a temperature below 80°C, in particular to a temperature below 50°C, by the cooling device (21) during the production of the blown film (300), and the cooling device (21) is arranged upstream of the heating device (22) in a flow direction of the material melt (300) at least in sections, in particular in a region on the melt channel (17).

21. A blow extrusion device (1000) with a blow head (100) according to any one of claims 1 to 9, a nozzle device (1b) according to claim 10, a base body (10) according to any one of claims 11 to 12, a temperature-control device (20) according to any one of claims 19 to 14 and/or for carrying out a method according to any one of claims 15 to 20.

## Revendications

1. Tête de soufflage (100) pour un dispositif d'extrusion par soufflage (1000) pour la fabrication d'un film soufflé (300) constitué d'un matériau en fusion (200), comprenant un dispositif à buse (1 ; 1a ; 1b ; 1c ; 1d) dans une portion de tête (110) de la tête de soufflage (100) avec une ouverture de sortie (11) pour la sortie du matériau en fusion (200) sous la forme d'un film soufflé (300), dans laquelle le dispositif à buse (1 ; 1a ; 1b ; 1c ; 1d) comprend un canal de matériau en fusion (17) pour le convoyage du matériau en fusion (200) vers l'ouverture de sortie (11) et un dispositif de régulation de température (20), dans laquelle le dispositif de régulation de température (20) est conçu et disposé pour la régulation de la température du matériau en fusion (200) dans le dispositif à buse (1 ; 1a ; 1b ; 1c ; 1d),
**caractérisée en ce que**
pour une isolation thermique entre une portion de régulation de température (14) du dispositif à buse (1 ; 1a ; 1b ; 1c ; 1d), pouvant être régulée en température par le dispositif de régulation de température (20), et une portion de base (120) de la tête de soufflage (100), qui est disposée dans une direction d'écoulement du matériau en fusion (200) en amont de la portion de régulation de température (14), au moins une première portion d'isolation thermique (13) est réalisée au moins partiellement entre la portion de régulation de température (14) et la portion de base (120), dans laquelle le dispositif de régulation de température (20) comprend un dispositif de refroidissement (21) pour le refroidissement du matériau en fusion (200) et un dispositif de chauffage (22) pour le chauffage du matériau en fusion (200) et le dispositif de refroidissement (21) est disposé, dans une direction d'écoulement du matériau en fusion (300), en amont du dispositif de chauffage (22).

2. Tête de soufflage (100) selon la revendication 1,
**caractérisée en ce que**
le dispositif de refroidissement (21) et/ou le dispositif de chauffage (22) présentent une forme annulaire et sont conçus de manière segmentée et dans une direction circonférentielle et peuvent être contrôlés individuellement.

3. Tête de soufflage (100) selon la revendication 1 ou 2,
**caractérisée en ce que**
le dispositif à buse (1 ; 1a ; 1b ; 1c ; 1d) comprend un corps de base (10) avec l'ouverture de sortie (11) pour la sortie du matériau en fusion (200), dans laquelle le corps de base (10) forme le canal de matériau en fusion (17) pour le convoyage du matériau en fusion (200) vers l'ouverture de sortie (11), dans laquelle, pour une isolation thermique, entre une portion de refroidissement (15) du corps de base (10), pouvant être refroidie par le dispositif de refroidissement (21) et une portion de chauffage (16) du corps de base (10), pouvant être chauffé par le dispositif de chauffage (22), est réalisé au moins une deuxième portion d'isolation thermique (12) au moins partiellement entre la portion de refroidissement (15) et la portion de chauffage (16).

4. Tête de soufflage (100) selon la revendication 3,
**caractérisée en ce que**
l'au moins une deuxième portion d'isolation thermique (12) est réalisée sous la forme d'un interstice annulaire entre la portion de refroidissement (15) et la portion de chauffage (16) ou, au moins en section transversale du corps de base (10), sous la forme d'au moins une rainure entre la portion de refroidissement (15) et la portion de chauffage (16) et/ou
l'au moins une deuxième portion d'isolation thermique (12) comprend un corps solide thermo-isolant (12') qui est disposé au moins à certains endroits entre la portion de refroidissement (15) et la portion de chauffage (16) et/ou
l'au moins une première portion d'isolation thermique (13) est réalisée sous la forme d'un interstice annulaire entre la portion de refroidissement (15) et la portion de base (120) ou, au moins en section transversale d'une portion du dispositif à buse (1 ; 1b) sous la forme d'au moins une rainure entre la portion de régulation de température (14) et la portion de base (120).

5. Tête de soufflage (100) selon l'une des revendications 1 à 4,
**caractérisée en ce que**
l'au moins une première portion d'isolation thermique (13) comprend un corps solide thermo-isolant (13') qui est disposé au moins à certains endroits entre la portion de régulation de température (14) et la portion de base (120) et/ou
la portion de refroidissement (15) présente, dans une zone au niveau du canal de matériau en fusion (17), une hauteur entre 50 mm et 120 mm, plus particulièrement une hauteur entre 50 mm et 100 mm et/ou
la portion de chauffage (16) présente, dans une zone au niveau du canal de matériau en fusion (17), une hauteur entre 10 mm et 30 mm.

6. Tête de soufflage (100) selon l'une des revendications 1 à 5,
**caractérisée en ce que**
la portion de chauffage (16) présente, dans une direction d'écoulement du matériau en fusion (200), une hauteur qui est inférieure de 50 %, plus particulièrement inférieure de 30 % à la hauteur de la portion de refroidissement (15) dans la direction d'écoulement du matériau en fusion (200) et/ou
le canal de matériau en fusion (17) comprend, plus particulièrement dans une zone au niveau de la portion de refroidissement (15), un rétrécissement et, plus particulièrement au niveau de la portion de chauffage (16), un élargissement, plus particulièrement en direction de l'ouverture de sortie (11) et/ou
le corps de base (10) ou le dispositif à buse (1 ; 1a ; 1b ; 1c ; 1d) comprend une portion de lèvres de buse et le dispositif de chauffage (22) et/ou le dispositif de refroidissement (21) sont disposés sur ou dans la portion de lèvres de buse.

7. Tête de soufflage (100) selon l'une des revendications 1 à 6,
**caractérisée en ce que**
une surface du canal de matériau en fusion (18) de la portion de refroidissement (15) présente un coefficient de friction de l'ordre de 0,03 à 0,07 et/ou
le dispositif de refroidissement (21) est disposé au moins à certains endroits dans la portion de refroidissement (15) et/ou le dispositif de refroidissement (22) est disposé au moins à certains endroits dans la portion de chauffage (16).

8. Tête de soufflage (100) selon l'une des revendications 1 à 7,
**caractérisée en ce que**
un contrôleur (30) est prévu pour le contrôle et/ou la régulation du dispositif à buse (1b) et le dispositif de refroidissement (21) et le dispositif de chauffage (22) peuvent être contrôlés par le contrôleur (30), plus particulièrement de manière indépendante l'un de l'autre.

9. Tête de soufflage (100) selon l'une des revendications 1 à 8,
**caractérisée en ce que**
la portion de refroidissement (15) comprend un matériau avec une conductivité thermique supérieure à 200 W/(m*K) et/ou
le corps de base (10) est réalisé d'une seule pièce et/ou
la deuxième portion d'isolation thermique (12) et/ou la première portion d'isolation thermique (13) présentent chacune une hauteur inférieure à 10 mm, plus particulièrement une hauteur inférieure à 5 mm.

10. Dispositif à buse (1 ; 1a ; 1b ; 1c ; 1d) pour une tête de soufflage (100) selon l'une des revendications 1 à 18, comprenant un corps de base (10) avec une ouverture de sortie (11) pour la sortie du matériau en fusion (200) sous la forme d'un film soufflé (300), dans lequel le corps de base (10) forme un canal de matériau en fusion (17) pour le convoyage du matériau en fusion (200) vers l'ouverture de sortie (11) et un dispositif de régulation de température (20), dans lequel le dispositif de régulation de température (20) comprend un dispositif de refroidissement (21) pour le refroidissement du matériau en fusion (200) et un dispositif de chauffage (22),pour le chauffage du matériau en fusion (200),
**caractérisé en ce que**
pour une isolation thermique entre une portion de refroidissement (15) du corps de base (10), pouvant être refroidie par le dispositif de refroidissement (21) et une portion de chauffage (16) du corps de base (10), pouvant être chauffée par le dispositif de chauffage (22), au moins une deuxième portion d'isolation thermique (12) est réalisée au moins partiellement entre la portion de refroidissement (15) et la portion de chauffage (16) et le dispositif de refroidissement (21) est disposé, dans une direction d'écoulement du matériau en fusion (300), en amont du dispositif de chauffage (22).

11. Corps de base (10) destiné à être utilisé dans une tête de soufflage (100) selon l'une des revendications 1 à 9 et/ou dispositif à buse (1 ; 1a ; 1b ; 1c ; 1d) selon la revendication 10, dans lequel le corps de base (10) comprend une ouverture de sortie (11) pour la sortie d'un matériau en fusion (200) sous la forme d'un film soufflé (300) et forme un canal de matériau en fusion (17) pour le convoyage du matériau en fusion (200) vers l'ouverture de sortie (11),
**caractérisé en ce que**
pour une isolation thermique entre une portion de refroidissement (15) du corps de base (10), pouvant être refroidie, et une portion de chauffage (16) du corps de base (10), pouvant être chauffée, au moins une deuxième portion d'isolation thermique (12) est réalisée au moins partiellement entre la portion de refroidissement (15) et la portion de chauffage (16) et le dispositif de refroidissement (21) est disposé, dans une direction d'écoulement du matériau en fusion (300), en amont du dispositif de chauffage (22).

12. Corps de base (10) selon la revendication 11,
**caractérisé en ce que**
l'au moins une première portion d'isolation thermique (12) est réalisée sous la forme d'un interstice annulaire entre la portion de refroidissement (15) et la portion de chauffage (16) ou, au moins en section transversale du corps de base (10), sous la forme d'au moins une rainure entre la portion de refroidissement (15) et la portion de chauffage (16).

13. Dispositif de régulation de température (20a ; 20b ; 20c) pour la régulation de la température d'un matériau en fusion (200) dans une tête de soufflage (100) selon l'une des revendications 1 à 9 et/ou dans un dispositif à buse (1 ; 1a ; 1b ; 1c ; 1d) selon la revendication 10,
**caractérisé en ce que**
le dispositif de régulation de température (20a ; 20b ; 20c) comprend au moins deux modules de régulation de température (21a, 22a, 23a ; 21b, 22b, 23b ; 21c, 22c, 23c, 24c), dans lequel au moins un premier module de régulation de température (21a, 23a ; 22b, 23b ; 21c, 23c) peut fonctionner comme un module de refroidissement et au moins un deuxième module de régulation de température (22a ; 21b ; 22c, 24c) peut fonctionner comme un module de chauffage et dans lequel, pour une isolation thermique entre l'au moins un premier module de régulation de température (21a, 23a ; 22b, 23b ; 21c, 23c) et l'au moins un deuxième module de régulation de température (22a ; 21b ; 23c, 24c), est réalisée au moins une portion d'isolation thermique (24a, 25a ; 24b, 25b ; 25c, 26c, 27c, 28c) disposée au moins partiellement entre l'au moins un premier module de régulation de température (21a, 23a ; 22b, 23b ; 21c, 23c) et l'au moins un deuxième module de régulation de température (22a ; 21b ; 22c, 24c), et le dispositif de refroidissement (21a, 23a ; 22b, 23b ; 21c, 23c) est disposé, dans une direction d'écoulement du matériau en fusion (300), en amont du dispositif de chauffage (22a ; 21b ; 22c, 24c).

14. Dispositif de régulation de température (20c) selon la revendication 13,
**caractérisé en ce que**
le dispositif de régulation de température (20c) présente une forme annulaire et/ou
l'au moins un premier module de régulation de température (21c, 23c) et l'au moins un deuxième module de régulation de température (23c, 24c) sont disposés radialement les uns à côté des autres au moins à certains endroits et l'isolation thermique entre l'au moins un premier module de régulation de température (21c, 23c) et l'au moins un deuxième module de régulation de température (23c, 24c) est réalisée, grâce à l'au moins une portion d'isolation thermique (25c, 26c, 27c, 28c), disposée au moins partiellement radialement entre l'au moins un premier module de régulation de température (21c, 23c) et l'au moins un deuxième module de régulation de température (22c, 24c).

15. Procédé de fabrication d'un film soufflé (300) à partir d'un matériau en fusion (200) avec une tête de soufflage (100) selon l'une des revendications 1 à 9 et/ou dispositif à buse (1 ; 1a ; 1b ; 1c ; 1d) selon la revendication 10.

16. Procédé selon la revendication 15,
**caractérisé en ce que**
la portion de régulation de température (14), plus particulièrement la portion de refroidissement (15) dans la portion de régulation de température (14), est régulée en température par le dispositif de régulation de température (20) ou le dispositif de refroidissement (21) lors de la fabrication du film soufflé (300) au moins à certains endroits, plus particulièrement dans une zone au niveau du canal de matériau en fusion (17), de façon à ce que le matériau en fusion est refroidie de plus de 10 %.

17. Procédé de fabrication d'un film soufflé (300) à partir d'un matériau en fusion (200) avec une tête de soufflage (100) selon l'une des revendications 1 à 9 et/ou dispositif à buse (1 ; 1a ; 1b ; 1c ; 1d) selon la revendication 10,
**caractérisé en ce que**
la portion de refroidissement (15) est régulée en température par le dispositif de refroidissement (21) lors de la fabrication du fil soufflé (300) au moins à certains endroits, plus particulièrement dans une zone au niveau du canal de matériau en fusion (17), jusqu'à une température inférieure à 80 °C, plus particulièrement jusqu'à une température inférieure à 50 °C.

18. Procédé (1) selon l'une des revendications 15 à 17,
**caractérisé en ce que**
la portion de chauffage (16) est régulée en température par le dispositif de chauffage (22) lors de la fabrication du fil soufflé (300) au moins à certains endroits, plus particulièrement dans une zone au niveau du canal de matériau en fusion (17), jusqu'à une température supérieure, plus particulièrement supérieure de 1 °C à 3 °C, à la température du matériau en fusion (200) au niveau de la portion de chauffage (16) et/ou
une profondeur de pénétration de l'augmentation de température dans une zone de la portion de chauffage (16) est plus courte de plus de 50 %, de préférence de plus de 75 %, plus particulièrement de préférence de plus de 85 % qu'une section transversale du matériau en fusion (200) dans cette zone de la portion de chauffage (16).

19. Procédé (1) selon l'une des revendications 15 à 18,
**caractérisé en ce que**
la portion de régulation de température (20) est conçue et régulée en température de façon à ce que le matériau en fusion (200) s'écoule, lors de la fabrication du film soufflé (300), avec au moins deux vitesses d'écoulement différentes à travers la portion de régulation de température (20) et/ou
la portion de refroidissement (15) et la portion de chauffage (16) sont conçues et régulées en température de façon à ce que le matériau en fusion (200) s'écoule, lors de la fabrication du film soufflé (300), à travers la portion de chauffage (16) avec une vitesse d'écoulement supérieure à la vitesse d'écoulement à travers la portion de refroidissement (15), dans lequel la vitesse d'écoulement du matériau en fusion (200) à travers la portion de chauffage (16) est de préférence de 1,5 fois à 15 fois, plus particulièrement de préférence de 2 fois à 10 fois plus élevée que la vitesse d'écoulement du matériau en fusion (200) à travers la portion de refroidissement (15).

20. Procédé de fabrication d'un film soufflé (300) à partir d'un matériau en fusion (200) avec une tête de soufflage (100), dans lequel la tête de soufflage (100) comprend, dans une portion de tête (110) de la tête de soufflage (100), un dispositif à buse (1 ; 1a ; 1b ; 1c ; 1d) avec une ouverture de sortie (11) pour la sortie du matériau en fusion (200) sous la forme d'un film soufflé (300), dans laquelle le dispositif à buse (1 ; 1a ; 1b ; 1c; 1d) comprend un canal de matériau en fusion (17) pour le convoyage du matériau en fusion (200) vers l'ouverture de sortie (11) et un dispositif de régulation de température (20), et le dispositif de régulation de température (20) comprend un dispositif de refroidissement (21) pour le refroidissement du matériau en fusion (200) et un dispositif de chauffage (22) pour le chauffage du matériau en fusion (200), dans lequel le dispositif à buse (1 ; 1a; 1b; 1c; 1d) comprend une portion de refroidissement (15) pouvant être refroidie par le dispositif de refroidissement (21) et une portion de chauffage (16) pouvant être chauffée par le dispositif de chauffage (22),
**caractérisé en ce que**
la portion de chauffage (15) est régulée en température par le dispositif de refroidissement (21) lors de la fabrication du film soufflé (300) au moins à certains endroits, plus particulièrement dans une zone au niveau de canal de matériau en fusion (17), jusqu'à une température inférieure à 80 °C, plus particulièrement jusqu'à une température inférieure à 50 °C et le dispositif de refroidissement (21) est disposé, dans une direction d'écoulement du matériau en fusion (300), en amont du dispositif de chauffage (22).

21. Dispositif d'extrusion par soufflage (1000) avec une tête de soufflage (100) selon l'une des revendications 1 à 9, un dispositif à buse (1b) selon la revendication 10, un corps de base (10) selon l'une des revendications 11 à 12, un dispositif de régulation de température (20) selon l'une des revendications 19 à 14 et/ou pour l'exécution d'un procédé selon l'une des revendications 15 à 20.
